# EUROPÄISCHE PATENTSCHRIFT

(11) **EP 2 852 261 B1**
(45) Veröffentlichungstag und Bekanntmachung des Hinweises auf die Patenterteilung: **17.06.2020**
(21) Anmeldenummer: 13185019.0
(22) Anmeldetag: 18.09.2013
(51) Int. Cl.: H05B 41/38

(54) **Verfahren zum Ermitteln einer vorgebbaren Wellenform eines Lampenstroms zum Betreiben einer Entladungslampe einer Projektionsanordnung und Projektionsanordnung**
Method for determining a predetermined waveform of a lamp current for operating a discharge lamp of a projection apparatus and projection device
Procédé de détermination d'une forme d'onde pouvant être prédéterminée d'un courant de lampe pour le fonctionnement d'une lampe de décharge d'un agencement de projection et agencement de projection

(43) Veröffentlichungstag der Anmeldung: 25.03.2015
(73) Patentinhaber: OSRAM GmbH, 80807 München (DE)
(72) Erfinder: Czichy, Marc, 13597 Berlin (DE)

(56) Entgegenhaltungen:
- WO-A1-2008/089846
- WO-A2-2010/086191
- DE-A1-102010 039 221
- DE-A1-102011 089 592
- US-A1- 2006 050 246
- US-A1- 2008 246 926
- US-A1- 2010 141 906
- US-A1- 2011 140 625
- US-A1- 2013 169 184
- TOUSAIN R ET AL: "Iterative Learning Control in a Mass Product : Light on Demand in DLP projection systems", AMERICAN CONTROL CONFERENCE, 2007. ACC '07, IEEE, PISCATAWAY, NJ, USA, 9. Juli 2007 (2007-07-09), Seiten 5478-5483, XP031215203, ISBN: 978-1-4244-0988-4

## Beschreibung

### Technisches Gebiet

Die Erfindung geht aus von einem Verfahren zum Ermitteln einer vorgebbaren Wellenform eines Lampenstroms zum Betreiben einer Entladungslampe einer Projektionsanordnung gemäß dem Oberbegriff des Patentanspruchs 1 und einer Projektionsanordnung gemäß dem Oberbegriff des Patentanspruchs 14.

### Stand der Technik

Aus dem Stand der Technik bekannte Projektionsanordnungen, wie z.B. DLP-Projektoren, umfassen ein Farbrad und eine Entladungslampe, wie z.B. UHP-Lampen, zum Beleuchten des Farbrads. Das Farbrad dreht sich dabei mit einer vorgegebenen, insbesondere konstanten, Frequenz. Die Lampen werden dabei mit Wechselstrom betrieben und durch ein Vorschaltgerät angesteuert. Bei einer Kommutierung des Lampenstroms erfolgt eine Umpolung der beiden Elektroden der Entladungslampe. In Anpassung der Betriebsfrequenz der Entladungslampe an das Farbrad stellt das Vorschaltgerät einen geeigneten Lampenstrom mit einer bestimmten Wellenform mit einem Kommutierungsschema bereit.

Weiterhin weisen derartige Projektoren einen Integrator auf. Dieser ist dazu ausgelegt, die von unterschiedlichen Punkten des Lichtbogens zwischen den Elektroden im Betrieb der Entladungslampe emittierte Strahlung durch Vielfachreflexion so zu mischen, dass Ungleichmäßigkeiten im Lichtniveau des projizierten Bildes kompensiert werden. Dennoch kommt es unter Umständen zu sichtbaren Oszillationen im Lichtniveau des projizierten Bildes, z.B. wenn sich die Projektorhardware aus Kostengründen nicht weiter optimieren lässt, wie durch die Wahl eines im Verhältnis zu seiner Eintrittsfläche längeren und damit effektiveren Integrators.

Die DE 10 2010 039221 A1 beschreibt ein Verfahren zum Betreiben einer Entladungslampe einer Projektionsanordnung außerhalb ihres nominalen Leistungsbereichs. Bei einem Betrieb der Lampe in einem höheren Leistungsbereich wird überprüft, ob die Lampe einen zu starken Elektrodenrückbrand aufweist und falls dem so ist, werden Betriebsparameter der Lampe nach einem vorbestimmten Schema geändert. Bei einem Betrieb der Lampe in niedrigeren Leistungsbereichen wird überprüft, ob die Lampe zum Flickern neigt, und falls dem so ist, werden die Betriebsparameter ebenfalls nach einem geeigneten Schema geändert.

Die US 2013/169184 A1 beschreibt ein Verfahren zum Betreiben einer Entladungslampe basierend auf einem Steuersignal zum Steuern der Lichtmenge. Dabei sind Modulationsfaktoren, die zu den jeweiligen Farbsegmenten eines Farbrads korrespondieren, in einem Speicher abgelegt und eine Steuerung des Lampenstroms erfolgt in Abhängigkeit von diesen Modulationsfaktoren.

Die US 2008/246926 A1 beschreibt ein Verfahren zum Betreiben einer Entladungslampe einer Projektionsanordnung, bei dem der Lampenstrom gemäß einer vorbestimmten Modulationsfunktion in seiner Amplitude moduliert wird. Darüber hinaus wird auch die Pulsweite des Lampenstroms moduliert.

### Darstellung der Erfindung

Die Aufgabe der vorliegenden Erfindung ist es daher, ein Verfahren zum Ermitteln einer vorgebbaren Wellenform eines Lampenstroms zum Betreiben einer Projektionsanordnung und eine Projektionsanordnung bereitzustellen, mittels welchen sich Oszillationen im Lichtniveau eines projizierten Bildes reduzieren lassen.

Diese Aufgabe wird gemäß einem ersten Aspekt der Erfindung durch ein Verfahren mit den Merkmalen des Patentanspruchs 1 und eine Projektionsanordnung mit den Merkmalen des Patentanspruchs 15 gelöst, sowie gemäß einem zweiten Aspekt der Erfindung durch ein Verfahren mit den Merkmalen des Patentanspruchs 14 und einer Projektionsanordnung mit den Merkmalen des Patentanspruchs 16. Vorteilhafte Ausgestaltungen finden sich in den abhängigen Ansprüchen.

Die Erfindung beruht dabei auf der Erkenntnis, dass Oszillationen im Lichtniveau eines projizierten Bildes von der Art der Ansteuerung der Entladungslampe, insbesondere von der Ausgestaltung eines Kommutierungsschemas einer Wellenform des Lampenstroms, mit welcher die Entladungslampe angesteuert wird, abhängen.

Das erfindungsgemäße Verfahren gemäß dem ersten Aspekt der Erfindung dient dem Ermitteln einer vorgebbaren Wellenform eines Lampenstroms zum Betreiben einer Entladungslampe einer Projektionsanordnung in zumindest einem ersten Betriebsmodus. Die Projektionsanordnung weist dabei ein vorgegebenes drehbares Farbrad und die Entladungslampe zum Beleuchten des Farbrads auf, wobei die Entladungslampe weiterhin zwei Elektroden aufweist. Des Weiteren umfasst die Projektionsanordnung ein Vorschaltgerät für die Entladungslampe, das im Betrieb der Projektionsanordnung der Entladungslampe einen als Wechselstrom ausgebildeten Lampenstrom mit der vorgebbaren Wellenform, die ein vorgebbares Kommutierungsschema aufweist, bereitstellt, so dass eine Polung der Elektroden gemäß dem vorgebbaren Kommutierungsschema kommutiert wird. Beim erfindungsgemäßen Verfahren wird zunächst mindestens eine erste Wellenform mit einem ersten Kommutierungsschema bereitgestellt. Weiterhin wird überprüft, ob ein Betrieb der Entladungslampe mit einem Lampenstrom mit der mindestens einen ersten Wellenform ein Kriterium von zwei Kriterien erfüllt, wobei eines der zwei Kriterien eine Lebensdauer der Entladungslampe betrifft und eines der zwei Kriterien eine Flimmeramplitude der Projektionsanordnung betrifft. Falls das eine Kriterium erfüllt ist, wird überprüft, ob ein Betrieb der Entladungslampe mit einem Lampenstrom mit der mindestens einen ersten Wellenform ein weiteres Kriterium der zwei Kriterien erfüllt. Falls zumindest das eine und das weitere Kriterium erfüllt sind, wird die mindestens eine erste Wellenform in einem Speicher der Projektionsanordnung abgelegt und als die vorgebbare Wellenform am Vorschaltgerät der Entladungslampe bereitgestellt.

Beim erfindungsgemäßen Verfahren wird es somit ermöglicht, eine Wellenform für einen Lampenstrom bereitzustellen, die nicht nur das Erfülltsein eines Kriteriums in Bezug auf die Lebensdauer der Entladungslampe erfüllt, sondern die durch die Erfordernis des Erfülltseins des zweiten Kriteriums in Bezug auf eine Flimmeramplitude auch Oszillationen im Lichtniveau eines projizierten Bildes reduzierten kann. Somit kann durch geeignete Wahl eines Kommutierungsschemas für eine Wellenform gemäß diesen Kriterien die Flimmeramplitude gesenkt und somit auf kostengünstige Weise ohne das Vorsehen zusätzlicher und teurerer Komponenten, wie bessere Integratoren, eine deutliche Verbesserung eines projizierten Bildes und der Bildqualität erzielt werden.

Bei einer vorteilhaften Ausgestaltung des Verfahrens wird, falls zumindest eines der zwei Kriterien nicht erfüllt ist, das erste Kommutierungsschema der mindestens einen ersten Wellenform geändert und anschließend die Vorgehensweise gemäß dem erfindungsgemäßen Verfahren für die erste Wellenform mit dem geänderten Kommutierungsschema wiederholt. Insbesondere wird dabei wiederum zunächst überprüft, ob eines der beiden Kriterien in Bezug auf Lebensdauer oder Flimmeramplitude erfüllt ist. Welches der beiden Kriterien dabei zuerst überprüft wird, spielt dabei prinzipiell keine Rolle. Bevorzugt wird auf das Kriterium zuerst geprüft, dessen Überprüfung weniger Zeit in Anspruch nimmt. Sollte das zuerst geprüfte Kriterium erfüllt sein, wird auf das Erfülltsein des zweiten Kriteriums geprüft. Ist das zuerst geprüfte Kriterium nicht erfüllt, so muss auf das zweite Kriterium erst gar nicht geprüft werden, da die erste Wellenform nur dann dem Vorschaltgerät bereitgestellt wird, wenn beide Kriterien erfüllt sind. Ist also das Kriterium, auf das zuerst geprüft wird, nicht erfüllt, so wird wiederum das Kommutierungsschema geändert und die erste Wellenform mit dem erneut geänderten Kommutierungsschema wiederum auf das Erfülltsein eines und ggf. noch des zweiten Kriteriums geprüft, falls das zuerst geprüfte erfüllt ist, usw.. Dabei wird bevorzugt das Kommutierungsschema so oft geändert, bis eine erste Wellenform mit einem Kommutierungsschema bereitgestellt ist, die beide Kriterien erfüllt. Die Kriterien in Bezug auf Lebensdauer und Flimmeramplitude können dabei je nach Erfordernis vorgegeben werden. Durch dieses Verfahren kann somit auf vorteilhafte Weise gewährleistet werden, dass eine dadurch bestimmte Wellenform für einen Lampenstrom einen Betrieb der Entladungslampe ermöglicht, der die gewünschten Ansprüche an Lebensdauer und Flimmerverhalten erfüllt.

Bei einer weiteren vorteilhaften Ausgestaltung der Erfindung wird zum Ermitteln einer vorgebbaren zweiten Wellenform des Lampenstroms zum Betreiben der Entladungslampe der Projektionsanordnung in zumindest einem zweiten vom ersten verschiedenen Betriebsmodus mindestens eine zweite Wellenform mit einem zweiten Kommutierungsschema bereitgestellt. Dabei ist das Kommutierungsschema derart ausgestaltet, dass es in einem vorgegebnen Zeitintervall eine gerade Anzahl an Kommutierungen aufweist, wobei das Zeitintervall dadurch vorgegeben ist, dass sich das Farbrad beim Betrieb der Projektionsanordnung in diesem Zeitintervall im zweiten Betriebsmodus zweimal dreht. Insbesondere bezieht sich diese Ausgestaltung auf eine sogenannte 2X-Ansteuerung des Farbrads, bei der sich das Farbrad zweimal während einer vorbestimmten Zeitdauer, insbesondere in 2/120Hz ≈ 16,67ms dreht, was einer Drehfrequenz des Farbrads von 120Hz entspricht. Wie später noch genauer erläutert wird, ist es durch das Vorsehen eines Kommutierungsschemas mit einer geraden Anzahl an Kommutierungen auf besonders vorteilhafte Weise möglich, die Flimmerfrequenz in einen Frequenzbereich zu verschieben, der für das menschliche Auge nicht sichtbar ist. Somit lässt sich auch durch diese Ausgestaltung der Erfindung auf besonders vorteilhafte Weise das Bildflimmern eines projizierten Bildes enorm reduzieren, bzw. die Sichtbarkeit des Flimmerns sogar vollständig beseitigen. Diese Ausgestaltung des Kommutierungsschemas mit einer geraden Anzahl an Kommutierungen kann dabei nicht nur zum Ermitteln eines Lampenstroms für den zweiten Betriebsmodus zugrunde gelegt werden, sondern lässt sich auch für den zuvor beschriebenen ersten Betriebsmodus umsetzen. Jedoch hat diese Ausbildung des Kommutierungsschemas gerade in einem zweiten Betriebsmodus, der als gedimmter, insbesondere stark gedimmter Betriebsmodus der Entladungslampe ausgestaltet sein kann, besonders große Vorteile, wie später noch erläutert wird.

Bei einer weiteren Ausgestaltung des Verfahrens wird nach dem Schritt des gerade beschriebenen Bereitstellens der zweiten Wellenform mit dem Kommutierungsschema mit einer geraden Anzahl an Kommutierungen in dem vorgegebenen Zeitintervall weiterhin überprüft, ob ein Betrieb der Entladungslampe mit einem Lampenstrom mit der mindestens einen zweiten Wellenform ein Kriterium, das eine Lebensdauer der Entladungslampe betrifft, erfüllt. Des Weiteren wird, falls zumindest das Kriterium erfüllt ist, die mindestens eine zweite Wellenform als die zweite vorgebbare Wellenform am Vorschaltgerät der Entladungslampe durch Ablegen der mindestens einen zweiten Wellenform in einem Speicher der Projektionsanordnung bereitgestellt. Somit kann auch für die zweite Wellenform gewährleistet werden, dass diese ein Lebensdauerkriterium erfüllt.

Auch hierbei ist wiederum die Ausgestaltung möglich, dass falls das Kriterium nicht erfüllt ist, das zweite Kommutierungsschema der mindestens einen zweiten Wellenform geändert wird und dann der Schritt der Überprüfung, ob das Kriterium in Bezug auf die Lebensdauer der Entladungslampe erfüllt ist, wiederholt wird. Dabei kann das zweite Kommutierungsschema wiederum so oft geändert werden, bis das Kriterium erfüllt ist, und erst dann die zweite Wellenform mit dem gefundenen Kommutierungsschema dem Vorschaltgerät bereitgestellt werden.

Bevorzugt wird im ersten Betriebsmodus die Entladungslampe ungedimmt und/oder wird bis zu einem maximalen Dimmgrad betrieben. Weiterhin ist es bevorzugt, dass im zweiten Betriebsmodus die Entladungslampe zumindest zeitweise mit mehr als einem minimalen Dimmgrad betrieben wird. Unter einem Dimmen ist dabei eine Reduktion der Betriebsleistung bzw. des Betriebsstroms der Entladungslampe zu verstehen und unter einem Dimmgrad die Reduktion der Betriebsleistung bzw. des Betriebsstroms in Bezug auf eine maximale Betriebsleistung bzw. Betriebsstrom. Durch Wellenformen mit einer geraden Anzahl an Kommutierungen im beschriebenen vorgegebenen Zeitintervall lässt sich die Flimmerfrequenz zu höheren Frequenzen als bei solchen mit ungerader Anzahl an Kommutierungen verschieben, wodurch das Flimmern aus dem sichtbaren Bereich des Auges verschoben werden kann. Jedoch haben Wellenformen mit ungerader Anzahl an Kommutierungen den Vorteil, dass mit einem Lampenstrom gemäß diesen Kommutierungsschemata betriebene Entladungslampen durchschnittlich höhere Lebensdauern aufweisen. Da jedoch gerade in stark gedimmten Betriebsmodi der Entladungslampe die Elektroden der Entladungslampe deutlich weniger belastet werden, kann dieser durch eine gerade Anzahl an Kommutierungen bedingte lebensdauermindernde Effekt durch die Minderbelastung der Elektroden im zweiten, insbesondere gedimmten, Betriebsmodus kompensiert werden. Darüber hinaus muss bei einem Vorsehen eines Lampenstroms gemäß einem Kommutierungsschema mit gerader Anzahl an Kommutierungen vorteilhafterweise auch keine zusätzliche Überprüfung mehr stattfinden, ob die mit dem Lampenstrom gemäß diesem Kommutierungsschema betriebene Entladungslampe ein Kriterium in Bezug auf eine Flimmeramplitude erfüllt.

Im ersten, insbesondere ungedimmten oder weniger stark gedimmten, Betriebsmodus ist dagegen zugunsten der Lebensdauer eine Wellenform mit ungerader Anzahl an Kommutierungen vorzuziehen, insbesondere da durch das Vorsehen des zweiten Kriteriums in Bezug auf die Flimmeramplitude somit dennoch Wellenformen ermittelt werden können, mittels welchen ein flimmerfreier Betrieb der Projektionsanordnung möglich ist. Daher ist es eine weitere bevorzugte Ausgestaltung der Erfindung, dass das erste Kommutierungsschema beim Bereitstellen so gewählt wird, dass es in einem Zeitintervall, in welchem sich das Farbrad zweimal dreht, eine ungerade Anzahl an Kommutierungen aufweist.

Bei einer weiteren Ausgestaltung der Erfindung kann zum Überprüfen, ob das Kriterium in Bezug auf die Lebensdauer für den ersten bzw. zweiten Betriebsmodus erfüllt ist, die voraussichtliche Lebensdauer der Entladungslampe bei einem Betrieb der Entladungslampe mit einem Lampenstrom mit der ersten bzw. zweiten Wellenform ermittelt werden, wobei das Kriterium dann erfüllt ist, wenn die ermittelte Lebensdauer größer oder gleich einem vorgegebenen Grenzwert ist. Die voraussichtliche Lebensdauer kann dabei durch Extrapolationsverfahren ermittelt werden, beispielsweise indem die Entladungslampe über eine bestimmte Zeitdauer mit einem Lampenstrom gemäß der bereitgestellten Wellenform betrieben wird, und die Entwicklung der Ausbildung oder Formänderung der Elektroden der Entladungslampe oder die Änderung der Elektrodenspannung während dieser Zeitdauer betrachtet, gemessen oder dokumentiert wird und aus diesen Informationen eine Vorhersage über die Lebensdauer getroffen wird. Es kann aber auch vorgesehen sein, die Entladungslampe bis zum Ende ihrer Lebensdauer zu betreiben und so direkt, d.h. ohne Schätzung oder Extrapolation, die Lebensdauer für gleichartige Entladungslampen und/oder Entladungslampentypen zu ermitteln. Hierbei sei angemerkt, dass bei den Verfahrensschritten zum Überprüfen auf genannte Kriterien wie Lebensdauer und/oder Flimmeramplitude Entladungslampen verwendet werden, die zu denen, die letztendlich in der Projektionsanordnung zum Betrieb verwendet werden gleichartig, insbesondere vom gleichen Lampentyp, sind, jedoch nicht identisch sein müssen.

Bei einer weiteren Ausgestaltung der Erfindung kann zum Überprüfen, ob das Kriterium in Bezug auf die Flimmeramplitude erfüllt ist, für eine vorgebbare Anzahl an unterschiedlichen Dimmgrade der Entladungslampe jeweils eine Flimmeramplitude einer photometrischen Größe des von der der Projektionsanordnung im Betrieb der Entladungslampe mit der ersten Wellenform ausgegebenen Lichts bestimmt werden. Das Kriterium ist dabei dann erfüllt, wenn die bestimmten Flimmeramplituden jeweils im Verhältnis zu einem Mittelwert der photometrischen Größe kleiner oder gleich einem vorgegebenen Grenzwert ist. Die photometrische Größe kann dabei z.B. ein Lichtstrom sein, der an einem Messort oder mehreren Messorten bzw. für einen oder mehrere Messpunkte, wie z.B. an einem oder mehreren Orten eines projizierten Bildes, z.B. eines zeitlich sich nicht verändernden Testbildes, in seinem zeitlichen Verlauf gemessen wird, wobei die Schwankungen des Lichtstroms in seinem zeitlichen Verlauf die Flimmeramplitude darstellt und diese in Bezug zum mittleren Lichtstrom, insbesondere über ein Zeitintervall gemittelt, gesetzt wird, um eine relative Flimmeramplitude zu erhalten. Als photometrische Größe kann aber auch eine Beleuchtungsstärke, eine Leuchtdichte, eine Lichtstärke, usw. herangezogen werden. Das Kriterium in Bezug auf die Flimmeramplitude ist also dann erfüllt, wenn für die verschiedenen Dimmgrade die jeweils gemessenen relativen Flimmeramplituden kleiner/oder gleich einem vorgegebenen Grenzwert sind. Dieser vorgegebene Grenzwert ist dabei insbesondere für die jeweiligen Flimmeramplituden derselbe. Weiterhin hängt dieser Grenzwert von der Flimmerfrequenz ab und kann anhand einer graphischen und/oder tabellarischen Zuordnung einer jeweiligen kritischen Flimmeramplitude als Grenzwert zu einer korrespondierenden Flimmerfrequenz ermittelt werden.

Bevorzugt sollte bei einer 2X-Ansteuerung des Farbrads und dem Betrieb der Entladungslampe mit einem Lampenstrom gemäß einem Kommutierungsschema mit einer ungeraden Anzahl an Kommutierungen die relative Flimmeramplitude einen Grenzwert von 1%-1,5% nicht übersteigen.

Weiterhin ist es bei dieser Ausgestaltung besonders vorteilhaft, die Flimmeramplituden für unterschiedliche Dimmgrade zu messen, da durch unterschiedliche Dimmgrade das Verhalten der Entladungslampe im Laufe ihrer Lebensdauer simuliert werden kann. Die zu einem bestimmten Dimmgrad der Entladungslampe gemessene Flimmeramplitude korrespondiert dabei zur Flimmeramplitude der (ungedimmten) Entladungslampe in einem bestimmten Alter. So kann auf vorteilhafte Weise ermittelt werden, wie sich das Flimmerverhalten der Entladungslampe im Laufe ihrer Alterung verändert, ohne dabei die komplette Lebensdauer der Entladungslampe durchlaufen zu müssen. Durch dieses Überprüfungsverfahren kann somit auf vorteilhafte Weise sichergestellt werden, dass für eine gegebene Wellenform, die dieses Kriterium in Bezug auf die Flimmeramplitude erfüllt, gewährleistet werden kann, dass auch im Laufe der gesamten Lebensdauer der Entladungslampe kein sichtbares Flimmern auftritt.

Um eine Ermittlung eines geeigneten Kommutierungsschemas einer Wellenform bereitzustellen, können noch weitere Kriterien und/oder Randbedingungen an das Kommutierungsschema gestellt werden, die insbesondere bei jedem Bereitstellen der ersten und/oder zweiten Wellenform berücksichtigt werden, wie im Folgenden näher beschrieben.

Bei einer vorteilhaften Ausgestaltung der Erfindung weist das Farbrad eine vorgegebene Anzahl an Farbsegmenten auf, und die Projektionsanordnung ist derart ausgebildet, dass im Betrieb der Projektionsanordnung die Entladungslampe einen vorgegebenen Bereich des Farbrads, welcher kleiner ist als ein jeweiliges Farbsegment, beleuchtet. Dabei wird beim Bereitstellen der ersten bzw. zweiten Wellenform mit dem ersten bzw. zweiten Kommutierungsschema das erste bzw. zweite Kommutierungsschema in Anpassung an eine vorgegebene Drehfrequenz des Farbrads im Betrieb der Projektionsanordnung im ersten bzw. zweiten Betriebsmodus und in Anpassung an eine Anordnung und Ausbildung der Segmente des Farbrads so gewählt, dass im Betrieb der Projektionsanordnung im ersten bzw. zweiten Betriebsmodus eine Kommutierung des Lampenstroms nur dann stattfindet, wenn sich der vorgegebene beleuchtete Bereich in einem Übergangsbereich zwischen zwei Segmenten des Farbrads befindet. Diese Ausgestaltung ist besonders vorteilhaft, da eine Kommutierung des Lampenstroms unweigerlich eine kurzzeitige Schwankung des Lichtlevels mit sich bringt. Damit sich dies nicht auf ein projiziertes Bild auswirkt, wird nur während eines sich zwischen zwei Farbsegmenten befindlichen Blindbereichs, einem sogenannten Spoke, kommutiert, denn dieser trägt nicht zum Gesamtlicht bei.

Bei einer weiteren Ausgestaltung der Erfindung wird das Kommutierungsschema beim Bereitstellen so gewählt, dass es zeitlich periodisch ist in Bezug auf ein vorgebbares Periodizitätsintervall. Dieses Periodizitätsintervall ist dabei bevorzugt ein Vielfaches eines Zeitintervalls, in welchem sich das Farbrad einmal gedreht hat, also z.B. 16,67ms, 33,33ms, 50ms, 66,67ms, usw.. Dies vereinfacht die Implementierung des Kommutierungsschemas und ermöglicht auf einfache Weise die Umsetzung weiterer an das Kommutierungsschema gestellte Randbedingungen, wie z.B. die Folgende.

Dabei wird das Kommutierungsschema beim Bereitstellen bevorzugt so gewählt, dass in Bezug auf das Periodizitätsintervall die Elektroden der Entladungslampe beim Betrieb der Entladungslampe mit einem Lampenstrom gemäß dem Kommutierungsschema die gleiche Zeit mit einer ersten Polung betrieben werden wie mit einer zweiten Polung, wobei durch eine Kommutierung die Elektroden der Entladungslampe von der ersten Polung in die zweite Polung wechseln oder umgekehrt. Somit befinden sich beide Elektroden über dieses Periodizitätsintervall hinweg jeweils die gleiche Zeit in einer anodischen und kathodischen Phase. Diese Bedingung gewährleistet damit eine gleichmäßige Beanspruchung und ein gleiches Wachstum beider Elektroden, was für die Lebensdauer der Entladungslampe förderlich ist.

Gemäß einem zweiten Aspekt der Erfindung wird ein Verfahren zum Ermitteln einer vorgebbaren Wellenform des Lampenstroms zum Betreiben der Entladungslampe der Projektionsanordnung in zumindest einem Betriebsmodus bereitgestellt. Dabei weist die Projektionsanordnung ein vorgegebenes drehbares Farbrad und die Entladungslampe zum Beleuchten des Farbrads auf, wobei die Entladungslampe zwei Elektroden aufweist, und wobei die Projektionsanordnung ein Vorschaltgerät für die Entladungslampe aufweist, das im Betrieb der Projektionsanordnung der Entladungslampe einen als Wechselstrom ausgebildeten Lampenstrom mit der vorgebbaren Wellenform, die ein vorgebbares Kommutierungsschema aufweist, bereitstellt, so dass eine Polung der Elektroden gemäß dem vorgebbaren Kommutierungsschema kommutiert wird. Beim erfindungsgemäßen Verfahren gemäß dem zweiten Aspekt wird mindestens eine Wellenform mit einem Kommutierungsschema bereitgestellt. Dabei ist das Kommutierungsschema derart beschaffen, dass es in einem vorgegebnen Zeitintervall eine gerade Anzahl an Kommutierungen aufweist, wobei das Zeitintervall dadurch vorgegeben ist, dass sich das Farbrad beim Betrieb der Projektionsanordnung in diesem Zeitintervall im zweiten Betriebsmodus zweimal dreht. Des Weiteren wird überprüft, ob ein Betrieb der Entladungslampe mit einem Lampenstrom mit der mindestens einen Wellenform ein Kriterium, das eine Lebensdauer der Entladungslampe betrifft, erfüllt. Weiterhin wird, falls zumindest das eine Kriterium erfüllt ist, die mindestens eine Wellenform in einem Speicher der Projektionsanordnung abgelegt und als die vorgebbare Wellenform am Vorschaltgerät der Entladungslampe bereitgestellt.

Dieses Verfahren gemäß dem zweiten Aspekt der Erfindung betrifft insbesondere die Ausgestaltung des Verfahrens gemäß dem ersten Aspekt der Erfindung zum Ermitteln der zweiten Wellenform für den zweiten, insbesondere den gedimmten, Betriebsmodus der Projektionsanordnung. Somit gelten die für den ersten Aspekt genannten Merkmale, Merkmalskombinationen, Ausgestaltungen und deren Vorteile, insbesondere die hinsichtlich der Ermittlung der zweiten Wellenform genannten Ausgestaltungen, in gleicher Weise für das erfindungsgemäße Verfahren gemäß dem zweiten Aspekt der Erfindung.

Weiterhin betrifft die Erfindung eine Projektionsanordnung gemäß dem ersten Aspekt, welche ein vorgegebenes drehbares Farbrad und eine Entladungslampe zum Beleuchten des Farbrads aufweist, die zwei Elektroden umfasst. Weiterhin weist die Projektionsanordnung ein Vorschaltgerät für die Entladungslampe auf, das dazu ausgelegt ist, im Betrieb der Projektionsanordnung der Entladungslampe einen als Wechselstrom ausgebildeten Lampenstrom einer vorgegebenen Wellenform, die ein vorgegebenes Kommutierungsschema aufweist, bereitzustellen, so dass eine Polung der Elektroden gemäß dem vorgebbaren Kommutierungsschema kommutiert wird. Darüber hinaus weist die Projektionsanordnung einen Speicher auf, in welchem die mindestens eine erste Wellenform abgelegt ist, wobei die im Speicher abgelegte Wellenform derart ausgebildet ist, dass bei einem Betrieb der Entladungslampe mit einem Lampenstrom mit der ersten Wellenform ein Kriterium in Bezug auf eine Lebensdauer der Entladungslampe und ein weiteres Kriterium in Bezug auf eine Flimmeramplitude der Entladungslampe erfüllt sind.

Dabei gelten alle für das erfindungsgemäße Verfahren gemäß dem ersten Aspekt der Erfindung genannten Merkmale, Merkmalskombinationen, Ausgestaltungen und deren Vorteile, soweit anwendbar, auch für die erfindungsgemäße Projektionsanordnung gemäß diesem ersten Aspekt. Darüber hinaus ermöglichen die genannten Verfahrensmerkmale die Weiterbildung der erfindungsgemäßen Projektionsanordnung durch korrespondierende gegenständliche Merkmale.

Weiterhin betrifft die Erfindung eine Projektionsanordnung gemäß dem zweiten Aspekt. Diese weist ein vorgegebenes drehbares Farbrad und eine Entladungslampe zum Beleuchten des Farbrads auf, die zwei Elektroden umfasst. Die Projektionsanordnung weist weiterhin ein Vorschaltgerät für die Entladungslampe auf, das dazu ausgelegt ist, im Betrieb der Projektionsanordnung der Entladungslampe einen als Wechselstrom ausgebildeten Lampenstrom einer vorgegebenen Wellenform, die ein vorgegebenes Kommutierungsschema aufweist, bereitzustellen, so dass eine Polung der Elektroden gemäß dem vorgegebenen Kommutierungsschema kommutiert wird. Darüber hinaus weist die Projektionsanordnung einen Speicher auf, in welchem die mindestens eine vorgegebene Wellenform abgelegt ist. Dabei ist das Kommutierungsschema derart beschaffen, dass es in einem vorgegebnen Zeitintervall eine gerade Anzahl an Kommutierungen aufweist, wobei das Zeitintervall dadurch vorgegeben ist, dass sich das Farbrad beim Betrieb der Projektionsanordnung in diesem Zeitintervall zweimal dreht. Weiterhin ist die im Speicher abgelegte Wellenform derart ausgebildet, dass der Betrieb der Entladungslampe mit einem Lampenstrom mit der vorgegebenen Wellenform ein Kriterium in Bezug auf eine Lebensdauer der Entladungslampe erfüllt.

Dabei gelten alle für das erfindungsgemäße Verfahren genannten Merkmale, Merkmalskombinationen, Ausgestaltungen und deren Vorteile, insbesondere gemäß dem ersten und dem zweiten Aspekt der Erfindung, soweit anwendbar, auch für die erfindungsgemäße Projektionsanordnung. Darüber hinaus ermöglichen die genannten Verfahrensmerkmale die Weiterbildung der erfindungsgemäßen Projektionsanordnung durch korrespondierende gegenständliche Merkmale.

Die Projektionsanordnung, insbesondere gemäß dem ersten sowie dem zweiten Aspekt der Erfindung, weist dabei bevorzugt einen Speicher auf, auf den durch das Vorschaltgerät zugreifbar ist und der in das Vorschaltgerät integriert sein kann. Dabei können für einen Betriebsmodus, z.B. dem ersten und/oder dem zweiten, oder auch für mehrere verschiedene Betriebsmodi der Projektionsanordnung jeweils eine oder auch jeweils mehrere Wellenformen abgelegt sein. Das Vorschaltgerät ist dabei dazu ausgelegt, beim Betrieb der Projektionsanordnung die Entladungslampe mit einem Lampenstrom gemäß einer abgelegten Wellenform anzusteuern, die vom Vorschaltgerät in Abhängigkeit eines gewählten oder an der Projektionseinrichtung eingestellten, z.B. von einem Benutzer, Betriebsmodus gewählt wird. Dabei kann es weiterhin vorgesehen sein, dass mehrere Wellenformen mit unterschiedlichen Kommutierungsschemata für einen Betriebsmodus abgelegt sind und das Vorschaltgerät zur Ansteuerung der Entladungslampe im Betrieb automatisch eine dieser Wellenformen nach vorbestimmten Kriterien wählt oder die Wellenform nach vorbestimmten Kriterien wechselt. Beispielsweise kann in einem Dynamic-Dimming-Modus, in welchem die Stromstärke bzw. der Dimmgrad der Entladungslampe auf die Helligkeit des zu projizierenden Bildes dynamisch angepasst wird, für unterschiedliche Stromstärken und/oder Dimmgrade eine korrespondierende Wellenform gewählt werden, insbesondere so, dass in Bezug auf eine Flimmeramplitude und/oder eine Lebensdauer der Betrieb der Entladungslampe optimiert ist.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

### Kurze Beschreibung der Zeichnungen

Im Folgenden soll die Erfindung anhand von Ausführungsbeispielen näher erläutert werden. Die Figuren zeigen:
- Fig. 1: eine schematische Darstellung von Ausprägungen des Lichtbogenansatzes auf den Elektrodenspitzen im Nominalbetrieb, im Eco-Betrieb und in stärker gedimmten Betriebsmodi einer Projektionsanordnung;
- Fig. 2: eine schematische Darstellung des Ausprägung des Bogenansatzes zu unterschiedlichen Zeiten der Wechselstromansteuerung der Entladungslampe in der phasenaufgelösten Bogenprojektion;
- Fig. 3: eine schematische Darstellung des Lichtsignals aus einem Bereich kurz vor einer jeweiligen Elektrodenspitze während einer Wechselstromansteuerung sowie die Mischlichtsignale, die sich aus der Lichtmischung des Lichts aus den jeweiligen Bereichen vor den Elektrodenspitzen ergeben bei unterschiedlichen Mischverhältnissen;
- Fig. 4: eine graphische Darstellung der Abhängigkeit der kritischen Flimmeramplitude von der Flimmerfrequenz bezogen auf das durchschnittliche menschliche Auge;
- Fig. 5a: eine schematische Darstellung eines 6-Segment Farbrads;
- Fig. 5b: eine schematische Darstellung der sukzessiven Beleuchtung der einzelnen Segmente des Farbrads bei einer 2X-Ansteuerung;
- Fig. 5c: eine schematische Darstellung eines Ausschnitts des 6-Segment Farbrads mit dem zwischen zwei Segmenten befindlichen Blindbereich;
- Fig. 6a: eine schematische Darstellung von Kommutierungsschemata für unterschiedliche Anzahlen an Kommutierungen;
- Fig. 6b: eine schematische Darstellung von weiteren Kommutierungsschemata für unterschiedliche Anzahlen an Kommutierungen;
- Fig. 7: eine schematische Darstellung der Temperaturschwankungen einer Elektrode während des Betriebs mit einem Lampenstrom gemäß der ebenfalls dargestellten Kommutierungsschemata für unterschiedliche Kommutierungsanzahlen;
- Fig. 8: ein Ablaufdiagramm eines Verfahrens zum Ermitteln einer Wellenform eines Lampenstroms zum Betreiben einer Entladungslampe einer Projektionsanordnung in einem ersten Betriebsmodus; und
- Fig. 9: ein Ablaufdiagramm eines Verfahrens zum Ermitteln einer Wellenform eines Lampenstroms zum Betreiben einer Entladungslampe einer Projektionsanordnung in einem zweiten Betriebsmodus.

### Bevorzugte Ausführung der Erfindung

Betreibt man die in DLP-Projektoren eingesetzten UHP-Lampen unterhalb der vorgegebenen Nominalleistung, so kann es zu sichtbaren Oszillationen im Lichtniveau des projizierten Bildes kommen. Dieses Phänomen hängt einerseits mit den physikalischen Vorgängen an den Lampenelektroden, andererseits mit dem Zusammenspiel von Entladungslampe und Farbrad in der Light-Engine des Projektors zusammen. Weist die Wechselstromansteuerung der Entladungslampe eine ungünstige Betriebsfrequenz auf, so resultiert in Interaktion mit dem synchronisierte Farbrad eine Oszillation des für die Projektion genutzten Lichts. Dieser Effekt wird umso größer, je stärker die Entladungslampe gedimmt wird, da sich die Ausprägung der Lichtauskopplung aus den Bereichen des Lichtbogens kurz von den Elektrodenspitzen (Lichtschwerpunkte) in die Light-Engine des Projektors je nach elektrischer Polung der Elektrode stark ändern kann.

Eine wichtige Vorraussetzung für die Erkennbarkeit des oben genannten Effekts ist jedoch eine ungenügende Mischung des von beiden Lichtschwerpunkten emittierten Lichts durch den in der Light-Engine ebenfalls befindlichen Integrator. Mit einem größer werdenden Ungleichgewicht der Ausnutzung beider Lichtschwerpunkte steigt auch die Amplitude der beobachteten Oszillation deutlich an. Lässt sich die Projektorhardware also beispielsweise aus Kostengründen nicht weiter optimieren, wie z.B. durch die Wahl eines längeren und damit effektiveren Integrators, muss die Ansteuerung der Entladungslampe den gegebenen Verhältnissen angepasst werden, wie dies erst durch die Erfindung ermöglicht wird. Im gedimmten Zustand der Entladungslampe lässt sich das Licht aus den beiden Bogenschwerpunkten selbst unter Verwendung eines längeren Integrators zudem nur noch unzureichend mischen. In diesem Fall kann dem oben beschriebenen Effekt nur durch eine durch die Erfindung ermöglichte geschickte Anpassung des Lampenbetriebs entgegengewirkt werden.

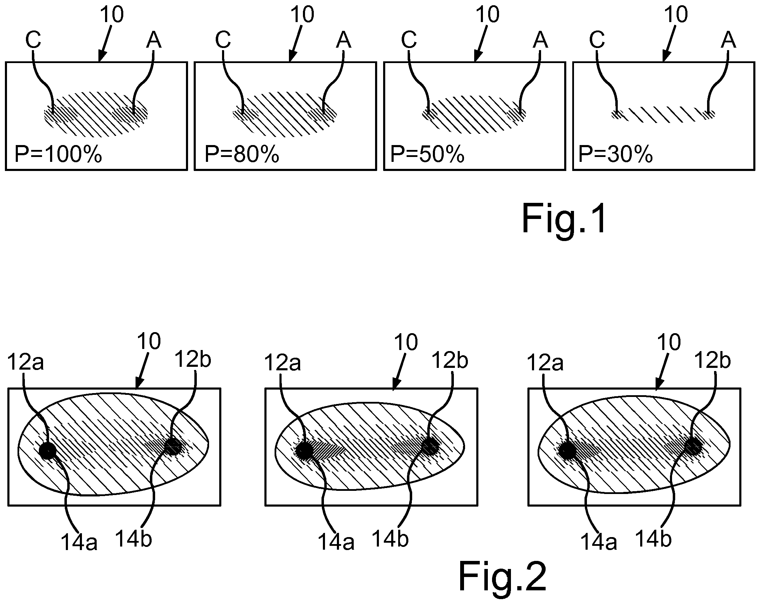

In den Figuren Fig. 1 bis Fig. 7 sollen dabei die wesentlichen der Erfindung zugrunde liegenden Erkenntnisse veranschaulicht werden.

Fig. 1 zeigt eine schematische Darstellungen der Ausprägung des Lichtbogenansatzes auf den Elektrodenspitzen des Lichtbogens 10 zwischen den Elektroden in den Darstellungen von links nach rechts im Nominalbetrieb P=100%, d.h. bei einer maximalen Betriebsleistung der Entladungslampe, im ECO-Betrieb P=80%, d.h. bei 80% der maximalen Betriebsleistung, und in stärker gedimmten Betriebsmodi P=50% und P=30%. Es ist deutlich zu erkennen, dass sich der kathodische Bogenansatz C stärker mit der Leistung (Strom) ändert als der anodische Bogenansatz A, was an den zunehmenden Helligkeitsunterschieden zwischen dem anodischen Bogenansatz A und dem kathodischen Bogenansatz C in den Darstellungen mit abnehmender Leistung zu erkennen ist. Der gleiche Effekt greift in kleinerem Umfang auch während der Elektrodenabkühlphasen (Kathode) innerhalb eines Wellenformzyklus.

Im Nominalbetrieb setzt der zwischen den beiden Wolframelektroden brennende Lichtbogen 10 im sogenannten Spot-Modus an den Elektrodenspitzen an. Im Wechselstrombetrieb ändert sich die Ausprägung dieses Elektrodenansatzes je nachdem, mit welcher Polarität, Anode oder Kathode, die Elektrode momentan betrieben wird. Der Strom im Lichtbogen 10 wird größtenteils durch Elektronen getragen. An der Oberfläche der Kathode müssen daher ständig Elektronen freigesetzt werden. Im Bereich der kathodischen Randschicht werden Ionen durch Elektronenstöße erzeugt und durch den Kathodenfall zu Oberfläche hin beschleunigt. Während die Elektronen zur Säule des Lichtbogens 10 abfließen, heizt das Ionenbombardement die Oberfläche der Kathode auf. Ein Teil der zugeführten thermischen Energie wird dabei auf die Festkörperelektronen übertragen und bewirken deren Austritt.

Um genügend Elektronen aus dem Elektrodenmaterial zu extrahieren, zieht sich der kathodische Bogenansatz C im Vergleich zur anodischen Phase bzw. zum anodischen Bogenansatz A, stärker zusammen und setzt damit äußerst begrenzt auf der Elektrodenspitze auf. Dabei wird ein großer Anteil des erzeugten Lichts aus einem sehr kleinen Bereich direkt vor der Kathodenoberfläche emittiert. Der Unterschied in der Lokalisation der Lichtemission zwischen kathodischem Bogenansatz C und anodischem Bogenansatz A wird umso größer, je weiter die Entladungslampe gedimmt wird. Im Extremfall zieht sich das Plasma in der kathodischen Phase zu einem extrem kontrahierten Bogenansatz C zusammen, während es in der anodischen Phase weiterhin diffus an der Elektrodenspitze ansetzt. Dementsprechend wird das Licht in der anodischen Phase aus einem im Vergleich weitaus größeren Winkelbereich emittiert. Dieser Effekt tritt immer dann auf, wenn der Bogenstrom bzw. der Lampenstrom entweder aktiv von außen abgesenkt wird, z.B. durch Dimmen, oder gegenläufig zu dem durch Rückbrand verursachten Anstieg des Spannungsniveaus infolge der Leistungsregelung des Vorschaltgeräts über der Lebensdauer absinkt. Die Flimmeranfälligkeit nimmt also in der Regel mit fortschreitender Lebensdauer der Entladungslampe zu.

Fig. 2 zeigt die Ausprägung des Bogenansatzes in einer phasenaufgelösten Bogenprojektion des Lichtbogens 10, d.h. wenn eine Elektrode von der anodischen in die kathodische Phase wechselt und die andere Elektrode von der kathodischen in die anodische Phase. Das Bild links zeigt die rechte Elektrode in der kathodischen Phase und die linke Elektrode in der anodischen Phase bei Ansteuerung durch einen Maintenance-Puls. In der rechten Abbildung hat sich die Polarität bereits umgekehrt. Deutlich sind die Lichtschwerpunkte 12a und 12b vor den Elektrodenspitzen zu erkennen, welche durch die kreisförmig umgrenzten Bereiche 14a und 14b jeweils kenntlich gemacht sind.

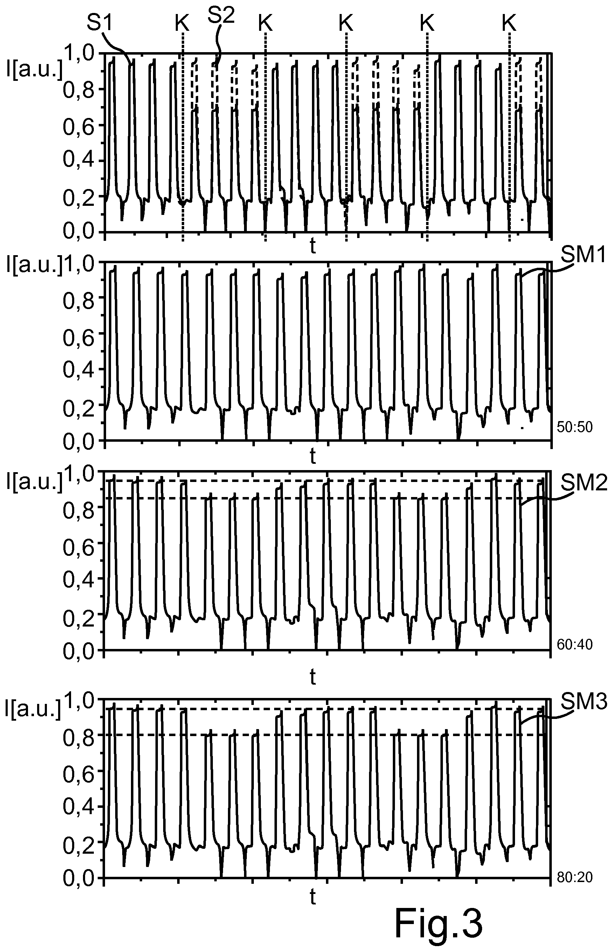

Die möglichen Auswirkungen der in den unterschiedlichen Phasen, anodisch und kathodisch, unterschiedlich stark ausgeprägten Bogenschwerpunkten 12a und 12b auf das Helligkeitsniveau eines projizierten Bildes soll anhand von Fig. 3 veranschaulicht werden.

Fig. 3 zeigt eine graphische Darstellung von Lichtsignalen S1 und S2 aus den Bereichen 14a und 14b (vgl. Fig. 2) kurz von einer jeweiligen Elektrodenspitze im zeitlichen Verlauf während einer Wechselstromansteuerung der Entladungslampe, sowie die Mischlichtsignale, die sich aus der Lichtmischung des Lichts aus den jeweiligen Bereichen 14a und 14b vor den Elektrodenspitzen ergeben bei unterschiedlichen Mischverhältnissen.

In Fig. 3 oben sind dabei die Kurven der Lichtsignale S1 und S2 als Intensität I in beliebigen Einheiten über der Zeit t aufgetragen. Dabei korrespondiert das Lichtsignal S1 zu dem in Fig. 2 schematisch als Kreis umgrenzten Bereich 14a kurz vor der ersten Elektrodenspitze und das Lichtsignal S2 korrespondiert zu dem in Fig. 2 schematisch als Kreis umgrenzten Bereich 14b kurz vor der zweiten Elektrodenspitze. Deutlich zu erkennen hierbei ist, dass bei jeder Kommutierung K des Lampenstroms, also bei einem Polungswechsel der beiden Elektroden, die jeweiligen Lichtsignale S1 und S2 in ihrer Intensität abwechselnd abnehmen und zunehmen.

Die drei darunter befindlichen Graphiken geben das resultierende Mischlichtsignal bei zunehmender Verstimmung des Schwerpunktanteils, z.B. verursacht durch einen zu kurzen Integrator, an. Die zweite Darstellung von oben zeigt dabei das Mischlichtsignal SM1 bei einer Mischung der Lichtsignale S1 und S2 im Verhältnis 50:50, die dritte Darstellung von oben zeigt das Mischlichtsignal SM2 bei einer Mischung der Lichtsignale S1 und S2 im Verhältnis 60:40 und die vierte Darstellung von oben zeigt das Mischlichtsignal SM3 bei einer Mischung der Lichtsignale S1 und S2 im Verhältnis 80:20.

Im Projektor wird das Licht aus den beiden unterschiedlich gearteten Lichtschwerpunkten 12a und 12b zu jedem Zeitpunkt mit Hilfe eines optischen Integrators gemischt und zur Erzeugung des Bildes auf der Projektionsfläche herangezogen. Trägt das Licht beider Bogenschwerpunkte 12a und 12b nach der Mischung durch den Integrator zu jeweils 50% zur insgesamt ausgekoppelten Lichtmenge bei, so hat der Wechsel des Elektrodenansatzes keinen Einfluss auf das Helligkeitsniveau, da der mittlere Lichtlevel auf einem gleichbleibenden Wert verweilt.

Kommt es aufgrund eines qualitativ minderwertigen Integrators zu einer Verstimmung des Lichtanteils aus den jeweiligen Bogenschwerpunkten 12a und 12b, z.B. 60:40, und wird das Licht eventuell sogar zu einem großen Anteil nur von einem der Bogenschwerpunkte 12a oder 12b zur Projektion herangezogen, so kommt es aufgrund des stetigen Polaritätswechsels zu einer regelmäßigen Schwankung des Lichtniveaus, da sich der Winkelbereich, aus dem das Licht emittiert wird, beim Wechsel vom anodischen zum kathodischen Modus stark ändert. Das Lichtniveau variiert bei diesem Wechsel wiederum umso stärker, je weiter die Entladungslampe gedimmt wird und je stärker der kathodische Bogenansatz C als direkte Folge kontrahiert.

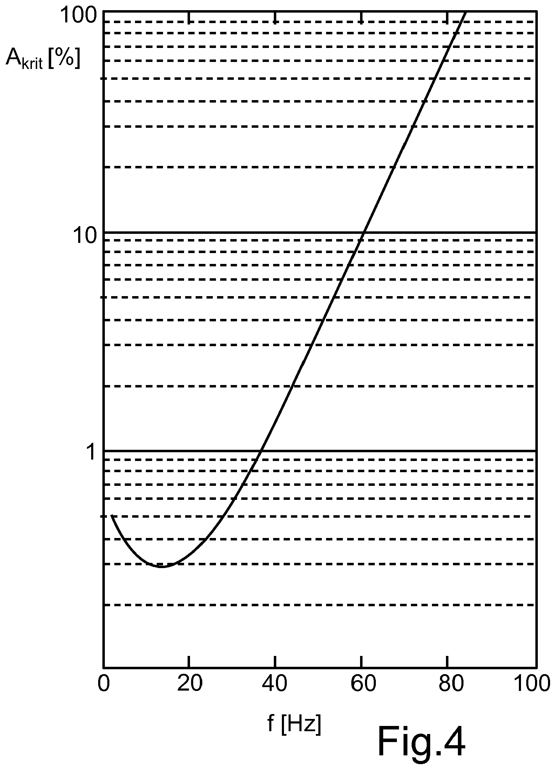

Fig. 4 veranschaulicht die physiologischen Grundlagen des Flickerempfindens und daraus resultierende Schlussfolgerungen. Wie stark ein flimmerndes Projektionsbild vom Betrachter wahrgenommen bzw. als störend empfunden wird, hängt stark von dessen Amplitude und Oszillationsfrequenz ab. Systematische Untersuchungen haben ergeben, dass eine Lichtoszillation unterhalb einer gewissen Amplitude bzw. oberhalb einer gewissen Frequenz vom menschlichen Auge nicht mehr wahrgenommen werden kann. Fig. 4 zeigt den genannten Zusammenhang in Form einer graphischen Darstellung der Abhängigkeit der relativen kritischen Flimmeramplitude Aₖᵣᵢₜ von der Flimmerfrequenz f bezogen auf das durchschnittliche menschliche Auge. Die relative kritische Flimmeramplitude Aₖᵣᵢₜ gibt dabei das Verhältnis der kritischen Flimmeramplitude zum Gesamtsignal, insbesondere in Prozent, an, wobei die kritische Flimmeramplitude die Flimmeramplitude ist, bei der ein Flimmern bei der korrespondierenden Flimmerfrequenz f von einem Auge gerade noch oder gerade nicht mehr wahrgenommen werden kann. Die relative kritische Flimmeramplitude Aₖᵣᵢₜ steigt für Frequenzen oberhalb f=10Hz relativ stark an. Bei f=40Hz darf die Flimmeramplitude eines Lichtsignals einen Anteil von ca. 1% des Gesamtsignals nicht überschreiten, um unerkannt zu bleiben. Erreicht die Flimmerfrequenz f einen Wert von f=60Hz, so steigert sich die relative kritische Flimmeramplitude Aₖᵣᵢₜ bereits um eine Zehnerpotenz. Das Auge wird mit steigender Flimmerfrequenz f demnach träger.

Will man den gerade beschriebenen Effekt zur Beseitigung des Bildflimmerns nutzen, so muss man die oben beschriebene Oszillation mit einer genügend hohen Frequenz ablaufen lassen, um die unvermeidlich entstehende Signalamplitude für den Betrachter ausreichend zu kaschieren.

Gemäß einem Aspekt der Erfindung wird dieser Effekt dadurch genutzt, indem das Kommutierungsschema der Wellenform des Lampenstroms so konzipiert bzw. bereitgestellt wird, dass die Flimmerfrequenz f zu sehr hohen Frequenzen hin verschoben wird, so dass das Flimmern für einen Betrachter nicht mehr sichtbar ist. Insbesondere lässt sich dies im Falle einer 2X-Ansteuerung durch ein Kommutierungsschema mit einer geraden Anzahl an Kommutierungen K realisieren. Ein weiterer Aspekt der Erfindung macht sich darüber hinaus die Erkenntnis zu nutze, dass sich auch die Flimmeramplitude je nach Kommutierungsschema ändert, so dass bei zu großer Flimmeramplitude eines gegebenen Kommutierungsschemas, insbesondere bei gegebenen Flimmerfrequenz f, durch Änderung dieses Kommutierungsschemas sich die Flimmeramplitude verringern lässt, insbesondere bis unterhalb der zur Flimmerfrequenz f korrespondierenden relativen kritischen Flimmeramplitude Aₖ₋ᵣᵢₜ.

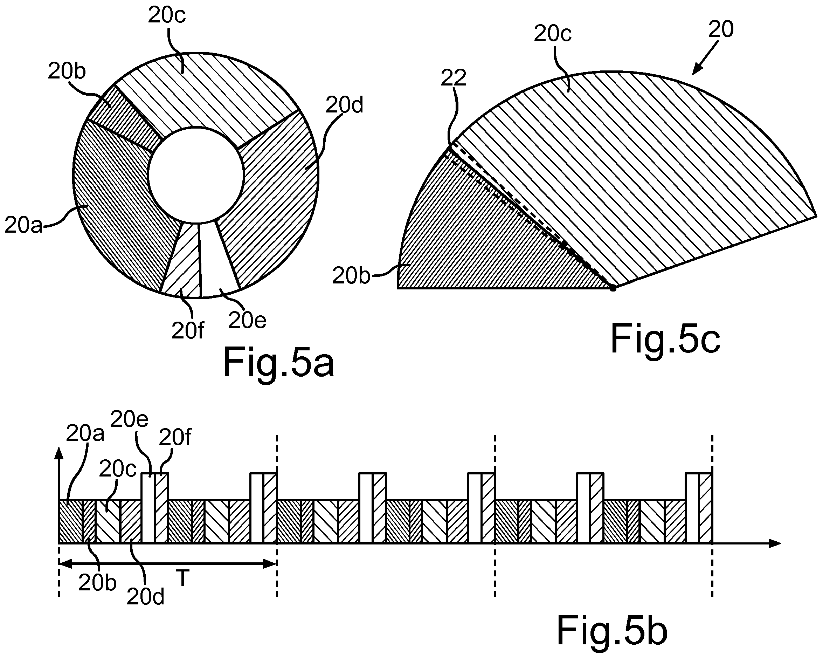

Die Frequenz des Bildflimmerns (scintillation), insbesondere die Flimmerfrequenz f, kann über die Frequenz des Lampenstroms gesteuert werden. Dazu wird der Lampenstrom zu unterschiedlichen Zeiten und abhängig von der zu erzielenden Betriebsfrequenz mehrfach innerhalb einer Farbradumdrehung kommutiert. Da die Kommutierung K unweigerlich eine kurzzeitige Schwankung des Lichtlevels mit sich bringt, wird bevorzugt nur während eines sich zwischen zwei Farbsegmenten 20a, 20b, 20c, 20d, 20e, 20f befindlichten Blindbereichs 22 (spoke) des Farbrads 20 (vgl. Fig. 5a u. Fig. 5c) kommutiert, denn dieser trägt nicht zum Gesamtlicht bei.

Fig. 5a zeigt eine schematische Darstellung eines 6-Segment Farbrads 20 und Fig. 5b eine schematische Darstellung der sukzessiven Beleuchtung der einzelnen Segmente 20a, 20b, 20c, 20d, 20e, 20f des Farbrads 20 bei einer 2X-Ansteuerung. Das Farbrad 20 weist dabei sechs Segmente 20a, 20b, 20c, 20d, 20e und 20f unterschiedlicher Farbe auf, die bei Drehung des Farbrads 20 sukzessive von der Entladungslampe beleuchtet werden. Die zeitliche Abfolge dieser sukzessiven Beleuchtung im zeitlichen Verlauf ist dabei in Fig. 5b schematisch für eine 2X-Ansteuerung dargestellt, bei der sich das Farbrad 20 im vorgegebenen Zeitintervall T=16,67ms zweimal dreht, was einer Drehfrequenz des Farbrads 20 von 120Hz entspricht. Fig. 5c zeigt weiterhin einen Ausschnitt des Farbrads 20, um den zwischen den zwei Segmenten 20b und 20c befindlichen Blindbereich 22 darzustellen.

Als Randbedingung gemäß einem Ausführungsbeispiel der Erfindung ist vorgesehen, Kommutierungen K bevorzugt nur am Ende eines jeweiligen Farbsegments 20a, 20b, 20c, 20d, 20e, 20f auszuführen, d.h. dass beim Bereitstellen einer Wellenform mit einem Kommutierungsschema dieses derart in Anpassung an die Drehfrequenz des Farbrads 20 und in Anpassung an die Anordnung und Ausbildung der Segmente 20a, 20b, 20c, 20d, 20e, 20f des Farbrads 20 ausgestaltet wird, dass eine Kommutierung K des Lampenstroms nur dann stattfindet, wenn sich der durch die Entladungslampe beleuchtete Bereich des Farbrads 20 in einem Übergangsbereich, d.h. im Blindbereich 22, zwischen zwei Segmenten 20a, 20b, 20c, 20d, 20e, 20f des Farbrads 20 befindet.

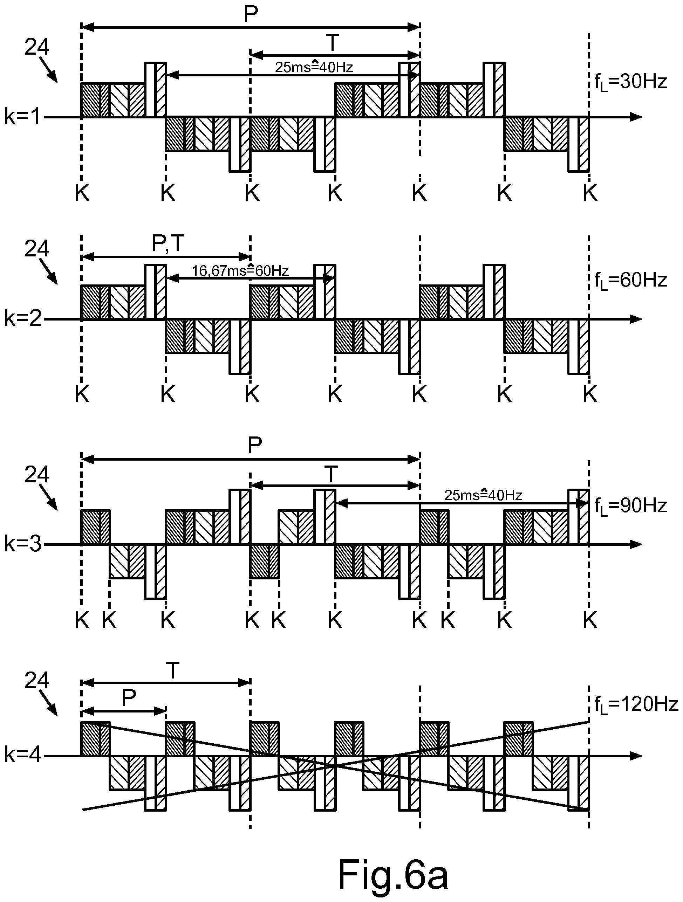

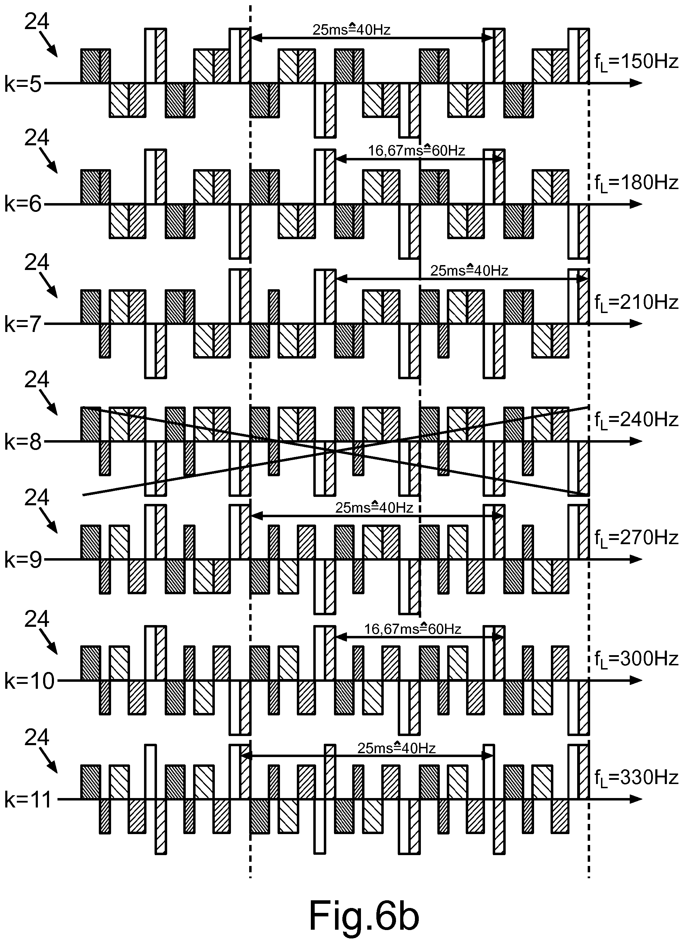

Fig. 6a und Fig. 6b zeigen schematische Darstellungen von Beispielen von Kommutierungsschemata 24 für unterschiedliche Anzahlen k an Kommutierungen K. Für ein Farbrad 20 mit n Segmenten 20a, 20b, 20c, 20d, 20e, 20f und k vorgesehenen Kommutierungen K ergibt sich eine sehr hohe Anzahl von 2n über k Wellenformpermutationen, von denen für den Fall n=6 für jedes n=1...11 eine Wellenformpermutation exemplarisch dargestellt ist. Physikalisch sinnvoll sind jedoch nicht alle Wellenformen, sondern nur die Wellenformen, die zu einer ausgeglichenen Ansteuerung der Elektroden führen, also keinen DC-Anteil aufweisen, insbesondere also solche Kommutierungsschemata 24, gemäß welchen sich eine jeweilige Elektrode beim Betrieb der Entladungslampe die gleiche Zeit in einer anodischen Phase befinden wie in einer kathodischen Phase in Bezug auf das Periodizitätsintervall P, nach welchem sich das Kommutierungsschema 24 wiederholt. Die dargestellten Beispiele für k=4 und k=8 Kommutierungen K fallen nicht unter diese Forderung und sind daher durchgestrichen.

Im Zuge der 2X-Ansteuerung dreht sich das Farbrad 20 zweimal in T=16,67ms. Im Falle einer einzigen Kommutierung K innerhalb dieses Zeitintervalls T resultiert daraus eine Lampenfrequenz von f_{L}=30Hz. Insbesondere ist die Lampenfrequenz dabei definiert als das Doppelte der Anzahl an Kommutierungen k durch das Zeitintervall T, d.h. f_{L}= (2n)/T. Mit jeder weiteren Kommutierung K erhöht sich die Frequenz f_{L} des Lampenstroms um jeweils 30Hz. Da die Kommutierungen K je nach Länge der einzelnen Farbsegmente 20a, 20b, 20c, 20d, 20e, 20f eng zusammenliegen können, ergibt sich real jedoch ein Kurvenzug, der sich aus mehrfrequenten Anteilen zusammensetzt.

In der dargestellten Abfolge der Kommutierungsschemata 24 ist zu erkennen, dass sich beispielsweise die Weißsegmente 20e und 20f (vgl. Fig. 5b) nur nach zwei möglichen Schemata kommutieren lassen. Sie folgen bei einer geraden Kommutierungenanzahl k einer Frequenz von f=60Hz und bei ungeraden Kommutierungsanzahlen k einer niedrigeren und damit für den Flimmereffekt förderlichen Frequenz von f=40Hz. Diese genannten Frequenzen f entsprechend dabei der zu Fig. 4 beschriebenen Flimmerfrequenz f. Insbesondere stellt die Flimmerfrequenz f das Inverse des Zeitintervalls dar, das vergeht, wenn ein mit einer ersten Polung der Entladungslampe beleuchtetes Segment 20a, 20b, 20c, 20d, 20e, 20f, in diesem Fall die Weißsegmente 20e, 20f, des Farbrads 20 wiederholt mit dieser ersten Polung der Entladungslampe beleuchtet wird, und während dieses Zeitintervalls zumindest einmal mit entgegengesetzter Polung der Entladungslampe beleuchtet wurde.

Ähnliche Verhältnisse ergeben sich natürlich auch für Projektorbetriebsmodi, die schneller drehende Farbräder 20 verwenden, z.B. bei einer 3X-Ansteuerung. Da die Weißsegmente 20e und 20f zudem in der Regel mit einem höheren Strom angesteuert werden, was durch die erhöhte Darstellung der Weißsegmente dargestellt werden soll, tritt das Flimmern hier gegebenenfalls besonders stark hervor. Werden andere Farbsegmente 20a, 20b, 20c, 20d überhöht angesteuert, kommt es speziell in diesen Farben zu dem genannten Effekt. Man spricht von Farbflimmern.

Um das Flimmern grundsätzlich zu vermeiden, kann der Lampenbetrieb einem geraden Kommutierungsschema 24 folgen, d.h. k=2, 4, 6, 8, .... Es ist zu beachten, dass mit dieser Methode gemäß Fig. 4 alle entstehenden Lichtschwankungen unterhalb eines Amplitudenanteils von 10% kompensiert werden können, was einen sehr großen Toleranzbereich der Flimmeramplitude darstellt. Das Verfahren der Wahl gerader Kommutierungszahlen k empfiehlt sich dabei insbesondere für den stark gedimmten Betrieb der Lampen (DynamicEco+), da in diesem Fall eine mögliche Minderung der Lebensdauer der Entladungslampe durch die in diesem Betriebsmodus deutlich geringer beanspruchten Elektroden kompensiert werden kann.

Fig. 6a und Fig. 6b zeigen zudem, dass die Elektroden abhängig von der gewählten Anzahl k der Kommutierungen K abwechselnd lange in einer Polarität verbleiben. Da die Elektrodenoberfläche in der kathodischen Phase durch Elektronenextraktion einem Kühlungseffekt unterworfen ist, zieht sich der kathodische Bogenansatz C während dieser Phase mehr und mehr zusammen. Das Licht wird also aus einem immer kleineren Winkelbereich abgestrahlt. Wechselt die Elektrode, z.B. im Fall k=1 nach Ablauf von t=16,76ms, in die anodische Phase, wird die Elektrode spontan geheizt und die Lichtauskopplung springt aufgrund der Änderung der Größe des Lichtschwerpunkts 12a,12b instantan auf einen größeren Winkelbereich, was in Verbindung mit einem ungünstig ausgelegten Integrator als Lichtschwankung auf der Projektionsfläche wahrgenommen werden kann.

Mit zunehmender Kommutierungsanzahl k sinkt die Abkühlzeit während der kathodischen Phase deutlich, da nun auch häufiger zwischen den Weißsegmenten 20e, 20f kommutiert werden muss. Selbstverständlich wird die Elektrode in der anodischen Phase auch kürzer aufgeheizt. Der Temperaturhub zwischen anodischer und kathodischer Phase wird mit steigender Lampenfrequenz f_{L} demnach immer kleiner. Der Unterschied zwischen anodischem Bogenansatz A und kathodischem Bogenansatz C verringert sich und wird nur noch durch das allgemeine Dimming-Niveau bestimmt.

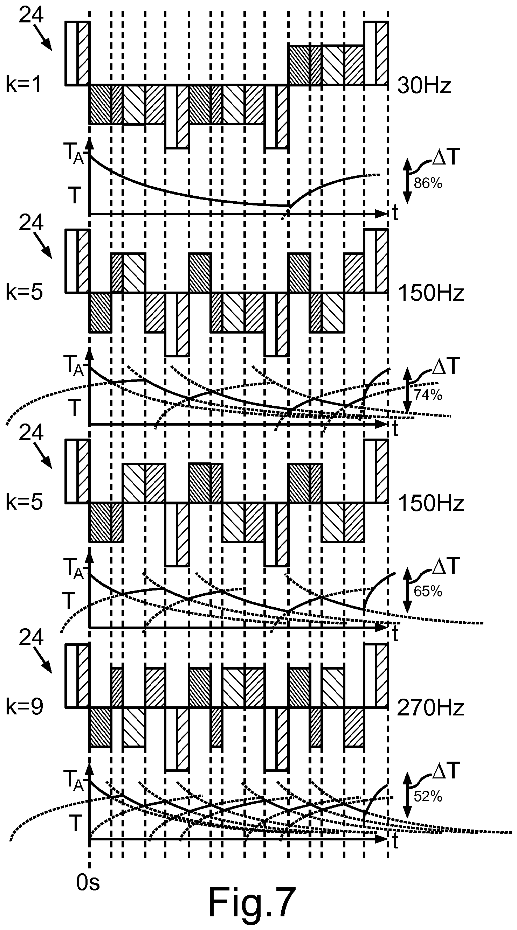

Fig. 7 zeigt eine schematische Darstellung der Temperatur T einer Elektrode während des Betriebs mit einem Lampenstrom gemäß der ebenfalls dargestellten Kommutierungsschemata 24 für unterschiedliche Kommutierungsanzahlen k in einer einfachen Modellbetrachtung.

Zu Beginn der ersten Kommutierung K weist die Elektrode eine Anfangstemperatur T_{A} auf, wobei in den Darstellungen der Temperaturverläufe immer von der gleichen Anfangstemperatur T_{A} ausgegangen wird. Nach der ersten Kommutierung K, d.h. bei t=0s, kühlt die Elektrode ab bis zur nächsten Kommutierung K. Nach dieser steigt die Temperatur der Elektrode wieder bis zur darauffolgenden Kommutierung K, usw.. Der Temperaturhub über das betrachtete Zeitintervall beträgt im oben dargestellten ersten Beispiel für k=1 86%. Die Prozentzahlen geben dabei die Temperaturdifferenz ΔT zwischen der in diesem Zeitintervall auftretenden maximalen und minimalen Temperatur im Verhältnis zur Anfangstemperatur T_{A} wieder.

Wie man erkennt, ändert sich die Temperatur T einer Elektrode umso stärker, je seltener die Elektrode kommutiert wird. Steigt die Häufigkeit der Kommutierungen K, so bleibt der Elektrode weniger Zeit zur Aufheizung bzw. Abkühlung. Dementsprechend pendelt die Elektrodentemperatur T schwächer um ein mittleres Niveau und der Bogenansatz ändert sich weniger, wodurch sich die Amplitude des Flimmerns verringert.

Selbst bei einer Flimmerwiederholfrequenz f von 40Hz kann man durch diese Maßnahme im Einzelfall die Erkennbarkeit des Flimmerns deutlich verringern. Außerdem lässt sich aus den beiden Darstellungen für k=5, die jeweils ein Kommutierungsschema 24 mit gleicher Anzahl k an Kommutierungen K jedoch mit unterschiedlicher Permutation der Kommutierungen K repräsentieren, folgern, dass sich durch eine geschickte Permutation einer festen Zahl k von Kommutierungen K die Schwankungen des Temperaturniveaus und damit die Amplitude des Flimmerns durchaus ebenfalls steuern bzw. verringern lässt.

All diese Erkenntnisse können in vorteilhafter Weise zum Ermitteln einer Wellenform eines Lampenstroms zum Betreiben einer Entladungslampe einer Projektionsanordnung genutzt werden.

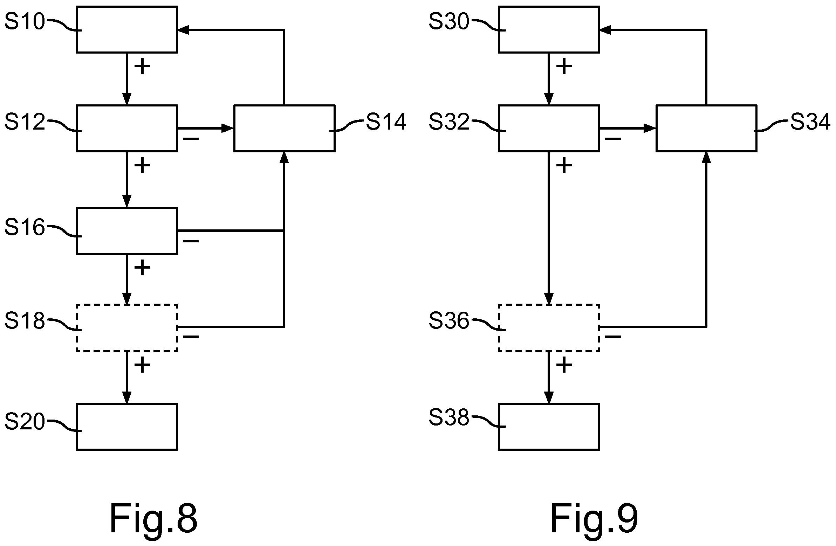

Fig. 8 zeigt ein Ablaufdiagramm zur Veranschaulichung eines Verfahrens zum Ermitteln einer Wellenform des Lampenstroms gemäß einem Ausführungsbeispiel der Erfindung.

Da Anfangsbedingungen an die Wellenform gestellt werden, die vom Farbrad 20 der Projektionsanordnung abhängen, insbesondere von der Anzahl n der Segmente 20a, 20b, 20c, 20d, 20e, 20f des Farbrads 20 und deren Anordnung und Größe, sowie auch von der Drehfrequenz des Farbrads 20, werden diese Informationen durch Vorgabe eines Farbrads 20 vorgegeben. In diesem Beispiel soll von einer 2X-Ansteuerung des Farbrads 20 ausgegangen werden. Darüber hinaus sind für unterschiedliche Betriebsmodi der Projektionsanordnung, die insbesondre durch unterschiedliche Dimmgrade charakterisiert sind, wie z.B. ungedimmter Nominalbetrieb P=100%, Eco-Betrieb bei P=80%, Dynamic-Dimming mit variablem und dynamisch anpassbarem Dimmgrad z.B. von P=70% bis P=30% oder Extreme-Dimming bei ca. P=30%, usw., unterschiedliche Kommutierungsschemata 24 vorteilhaft. Das hier beschriebene Beispiel ist dabei besonders bei wendiger stark gedimmten Betriebsmodi besonders vorteilhaft.

Dabei wird in einem ersten Schritt S10 eine Wellenform mit einem Kommutierungsschema 24 bereitgestellt, welches eine ungerade Anzahl k an Kommutierungen K innerhalb des Zeitintervalls T aufweist. Ein Kommutierungsschema 24 mit einer ungeraden Anzahl k an Kommutierungen K hat dabei den Vorteil, dass ein DC-Anteil leichter zu vermeiden ist, wie den Darstellungen in Fig. 6a und Fig. 6b zu entnehmen ist. Weiterhin basieren die meisten empirisch gewonnen Lebensdauerdaten der letzten Jahre auf diesen Wellenformen. Zudem lassen sich mit solchen Wellenformen in der Regel im Mittel höhere Lebensdauern der Entladungslampen erreichen.

Das Kommutierungsschema 24 weist dabei beim Bereitstellen bereits noch weitere bestimmte Charakteristiken auf. Beispielsweise weist die bereitgestellte Wellenform ein Kommutierungsschema 24 auf, das auf das vorgegebene Farbrad 20 derart abgestimmt ist, dass die Polung der Entladungslampe nur während eines Übergangsbereichs 22 zwischen zwei Farbsegmenten 20a, 20b, 20c, 20d, 20e, 20f kommutiert wird. Weiterhin ist das Kommutierungsschema 24 so ausgestaltet, dass es sich nach einem Periodizitätsintervall P wiederholt und weiterhin so, dass sich während des Periodizitätsintervalls P eine Elektrode der Entladungslampe beim Betrieb gemäß diesem Kommutierungsschema 24 die gleiche Zeit in einer anodischen und kathodischen Phase befindet. Weiterhin haben sich in den meisten Fällen Lampenfrequenzen f_{L} von f_{L}=60Hz bis f_{L}=150Hz, d.h. 2 bis 5 Kommutierungen K im Zeitintervall T, für einen Betrieb bei Nominalleistung bewährt und sollen daher bevorzugt auch weiterhin für diesen Modus angewendet werden.

Im Anschluss an das Bereitstellen der Wellenform in Schritt S10 wird in Schritt S12 überprüft, ob ein Betrieb der Entladungslampe mit der bereitgestellten Wellenform gemäß dem Kommutierungsschema 24 ein Kriterium in Bezug auf die Lebensdauer der Entladungslampe erfüllt.

Wenn zur gegebenen Entladungslampe in Kombination mit dem bereitgestellten Kommutierungsschema 24 bereits gewonnene Lebensdauerdaten existieren, so kann die Überprüfung des Kriteriums in Bezug auf die Lebensdauer in Schritt S12 einfach durch einen Vergleich der bereits gegebenen Lebensdauerdaten mit einem vorgegebenen Grenzwert der Lebensdauer erfolgen. Der Grenzwert hängt dabei zum einen vom Lampentyp ab und kann zum anderen auch von einem Benutzer frei vorgegeben werden, zumindest in gewissem Rahmen, wie z.B. durch eine für den Lampentyp charakteristische oder typische mittlere Lebensdauer.

Liegen beispielsweise keine Lebensdauerdaten zum Lampentyp mit dem korrespondierenden Kommutierungsschema 24 vor, so kann bei der Überprüfung auf das Lebensdauerkriterium auch eine Abschätzung der voraussichtlichen Lebensdauer erfolgen, beispielsweise durch Betreiben der Entladungslampe für einen vorgegebenen Zeitraum und dokumentieren des Alterungsprozesses während dieses Zeitraums, z.B. durch Messen der Stromstärke des Lampenstroms während dieses Zeitraums und extrapolieren dieser Messwerte.

Es kann aber auch ein kompletter Lebensdauerzyklus der Entladungslampe bei Ansteuerung dieser gemäß dem bereitgestellten Kommutierungsschema 24 durchlaufen werden, was zwar zeitaufwendig ist, dafür aber eine sehr genaue Bestimmung der Lebensdauer dieses Lampentyps bei Ansteuerung gemäß dem Kommutierungsschema 24 erlaubt.

Wenn dieses Kriterium in Bezug auf die Lebensdauer nicht erfüllt ist, so wird in Schritt S14 das Kommutierungsschema 24 geändert und das Verfahren beginnt in Schritt S10 mit dem Bereitstellen der Wellenform mit dem neuen geänderten Kommutierungsschema 24 erneut. Die Änderung des Kommutierungsschemas 24 kann dabei z.B. unter Beibehaltung der Anzahl k an Kommutierungen K des Kommutierungsschemas 24 durch eine Permutation der Kommutierungen K erfolgen und/oder durch Änderung der Anzahl k an Kommutierungen K, insbesondere unter Berücksichtigung oben genannter Bedingungen. Wird in Schritt S12 festgestellt, dass das Kriterium in Bezug auf die Lebensdauer erfüllt ist, so wird das Kommutierungsschema 24 beibehalten und der Betrieb der Entladungslampe in Schritt S16 auf ein Kriterium in Bezug auf eine Flimmeramplitude überprüft.

Zum Überprüfen, ob das Kriterium in Bezug auf die Flimmeramplitude erfüllt ist, kann für eine vorgebbare Anzahl an unterschiedlichen Dimmgraden der Entladungslampe jeweils eine Flimmeramplitude einer radiometrischen Größe oder bevorzugt photometrischen Größe, wie Lichtstrom, Beleuchtungsstärke, Leuchtdichte, Lichtstärke, usw., oder auch das Lichtsignal als Intensität des von der der Projektionsanordnung im Betrieb der Entladungslampe mit Wellenform ausgegebenen Lichts bestimmt werden. Das das Kriterium ist dabei dann erfüllt, wenn die bestimmten Flimmeramplituden jeweils im Verhältnis zu einem Mittelwert der radiometrischen bzw. photometrischen Größe, kleiner oder gleich einem vorgegebenen Grenzwert ist. Dieser Grenzwert kann beispielsweise einer tabellarischen oder auch graphischen Zuordnung, z.B. wie der in Fig. 4 dargestellten, entnommen werden. Beispielsweise kann der Grenzwert für eine gegebene Flimmerfrequenz f die dieser Frequenz f zugeordnete relative kritische Flimmeramplitude Aₖᵣᵢₜ sein. Bei einer 2X-Ansteuerung des Farbrads 20 und einer ungeraden Anzahl k an Kommutierungen K des Kommutierungsschemas 24 im Zeitintervall T ergibt sich, wie zu Fig. 6a und Fig. 6b beschrieben, beispielsweise eine Flimmerfrequenz f von 40Hz. Der Grenzwert der relativen Flimmeramplitude liegt also in diesem Beispiel bevorzugt bei ca. 1% bis 1,5%.

Durch die Messung der Flimmeramplitude für unterschiedliche Dimmgrade kann das Verhalten der Entladungslampe im Laufe ihrer Lebensdauer simuliert werden. Dadurch kann auf vorteilhafte Weise überprüft und bei der letztendlich am Vorschaltgerät bereitgestellten Wellenform gewährleistet werden, dass die Projektionsanordnung im Laufe der gesamten Lebensdauer der Entladungslampe die relative kritische Flimmeramplitude Aₖᵣᵢₜ nicht übersteigt.

Ist dieses Kriterium für eine bereitgestellte Wellenform nicht erfüllt, so wird in Schritt S14 wiederum das Kommutierungsschema 24 geändert und das Verfahren beginnt in Schritt S10 von vorne mit dem wiederum geänderten Kommutierungsschema 24.

Die Reihenfolge der Schritte S12 und S16 ist dabei beliebig, d.h. nach dem Bereitstellen der Wellenform in Schritt S10 kann auch erst auf das Erfülltsein des Kriteriums in Bezug auf die Flimmeramplitude geprüft werden und erst wenn dieses Kriterium von einem Kommutierungsschema 24 erfüllt ist, kann im Anschluss auf das Erfülltsein des Kriteriums in Bezug auf die Flimmeramplitude geprüft werden.

Darüber hinaus können noch weitere Kriterien vorgesehen werden, auf die der Betrieb der Entladungslampe oder der Projektionsanordnung geprüft werden. Diese optionalen weiteren Kriterien sollen durch Schritt S18 veranschaulicht werden. Beispielsweise kann in Schritt S12 eine Abschätzung der Lebensdauer erfolgen, und wenn diese Abschätzung das Kriterium in Bezug auf die Lebensdauer erfüllt, und zusätzlich auch das in Schritt S16 geprüfte Kriterium in Bezug auf die Flimmeramplitude erfüllt ist, kann in Schritt S18 eine genauere Überprüfung des Kriteriums in Bezug auf die Lebensdauer durch Durchlaufen des gesamten Lebensdauerzyklus erfolgen. Dadurch kann eine sehr genaue Aussage über die Lebensdauer getroffen werden und dennoch Zeit eingespart werden, da die Überprüfung in Schritt S18 erst dann stattfindet, wenn ein Kommutationsschema vorliegt, das das Kriterium in Bezug auf die Flimmeramplitude und das Kriterium in Bezug auf die Lebensdauer durch die Abschätzung in Schritt 12 sehr wahrscheinlich ebenfalls erfüllt.

Durch Anwendung dieser Kriterien und unter Berücksichtigung zumindest der genannten Bedingungen, die die in Schritt S10 bereitgestellten Wellenformen erfüllen sollen, lässt sich innerhalb weniger Iterationsschritte eine Wellenform finden, die die Kriterien in Bezug auf Lebensdauer und Flimmeramplitude erfüllt. Sind also die in den Schritten S12 und S16 und ggf. S18 überprüften Kriterien für ein Kommutierungsschema 24 erfüllt, so wird in Schritt S20 die Wellenform mit diesem Kommutierungsschema 24 in einem Speicher des Vorschaltgeräts abgelegt. Dabei können für einen Betriebsmodus der Projektionsanordnung auch mehrere nach diesem Verfahren ermittelte Wellenformen abgelegt werden, oder auch zu mehreren Betriebsmodi, die insbesondere durch unterschiedliche Dimmgrade, bevorzugt nur bis zu einem maximalen Dimmgrad, charakterisiert sind, jeweils eine oder mehrere Wellenformen abgelegt werden. Beim Betrieb der Projektionsanordnung kann das Vorschaltgerät je nach Betriebsmodus auf die korrespondierende Wellenform zugreifen und die Entladungslampe mit einem Lampenstrom gemäß dieser Wellenform betrieben.

Fig. 9 zeigt ein Ablaufdiagramm eines Verfahrens zum Ermitteln einer Wellenform für den Betrieb einer Entladungslampe gemäß einem weiteren Ausführungsbeispiel der Erfindung.

Nimmt die Flimmeramplitude aufgrund eines extrem gedimmten Betriebs einen zu großen Wert an, so empfiehlt sich die initiale Anwendung einer gerade kommutierten Wellenform. Dieses Verfahren wird also bevorzugt für einen sehr stark gedimmten Betriebsmodus der Projektionsanordnung angewandt. Das Verfahren beginnt in Schritt S30 mit dem Bereitstellen einer Wellenform mit einem Kommutierungsschema 24, jedoch hierbei mit einem Kommutierungsschema 24, das im Zeitintervall T eine gerade Anzahl k an Kommutierungen K aufweist. Auch an diese Wellenform können, wie oben beschrieben, weitere Bedingungen gestellt werden, wie, dass das Kommutierungsschema 24 periodisch ist, keinen DC-Anteil aufweist, dass in Anpassung an das Farbrad 20 im Betrieb nur zwischen zwei Farbsegmenten 20a, 20b, 20c, 20d, 20e, 20f kommutiert wird, dass die Anzahl k an Kommutierungen K bevorzugt zwischen 2 und 5 liegt, usw..

Nach dem Bereitstellen der Wellenform wird in Schritt S32 geprüft, ob ein Betrieb der Entladungslampe gemäß diesem Kommutierungsschema 24 ein Kriterium in Bezug auf eine Lebensdauer erfüllt. Diese Überprüfung kann dabei in gleicher Weise wie zu Fig. 8 beschrieben, erfolgen.

Ist dieses Kriterium nicht erfüllt, so wird in Schritt S34 das Kommutierungsschema 24 der Wellenform geändert, insbesondere wieder durch Ändern der Permutation der Kommutierungen K und/oder durch Ändern der Anzahl k an Kommutierungen K. Die Anfangsbedingungen der dadurch neu bereitgestellten Wellenform, insbesondere die gerade Anzahl k an Kommutierungen K innerhalb des Zeitintervalls T, sollen dabei weiterhin erfüllt sein. Das Verfahren beginnt in Schritt S30 daraufhin erneut mit der neu bereitgestellten Wellenform. Diese Iteration wird nun so lange durchgeführt, bis in Schritt S32 das LebensdauerKriterium erfüllt ist.

Daraufhin können im optionalen Schritt S36 weitere Kriterien geprüft werden. Beispielsweise kann die Überprüfung in Schritt S32 wiederum so ausgestaltet sein, dass nur eine Abschätzung der voraussichtlichen Lebensdauer erfolgt, was nicht so viel Zeit in Anspruch nimmt wie der Durchlauf eines gesamten Lebensdauerzyklus der Entladungslampe. Erst wenn eine geeignete Wellenform gefunden worden ist, die dieses Schätzkriterium erfüllt, kann im optionalen Schritt S36 beispielsweise eine genauere Überprüfung des Lebensdauer-Kriteriums erfolgen, indem der gesamte Lebensdauerzyklus durchlaufen wird.

Der Schritt zur Vermessung der Flimmeramplitude, wie beim vorhergehenden Beispiel in Schritt S16, kann in diesem Fall aufgrund der höheren Flimmerfrequenz f, insbesondere bei 60Hz, und der damit verbundenen Minderung der Entdeckbarkeit entfallen. Eine eventuell schlechtere Lebensdauerperformance der gerade kommutierten Wellenformen wird dann im gedimmten Lampenbetrieb durch die Minderbelastung der Elektroden kompensiert.

Wenn also für eine Wellenform das in Schritt S32 geprüfte Kriterium und ggf. das in Schritt S34 geprüfte Kriterium erfüllt sind, wird die Wellenform in Schritt S38 in einem Speicher des Vorschaltgeräts als zu einem bestimmten Betriebsmodus korrespondierend abgelegt. Auch hierbei können wiederum mehrere Wellenformen zu einem oder mehreren unterschiedlichen, insbesondere gedimmten, Betriebsmodi abgelegt werden.

## Patentansprüche

1. Verfahren zum Ermitteln einer vorgebbaren Wellenform eines Lampenstroms zum Betreiben einer Entladungslampe einer Projektionsanordnung in zumindest einem ersten Betriebsmodus, wobei die Projektionsanordnung ein vorgegebenes drehbares Farbrad (20) und die Entladungslampe zum Beleuchten des Farbrads (20) aufweist, wobei die Entladungslampe zwei Elektroden aufweist, wobei die Projektionsanordnung ein Vorschaltgerät für die Entladungslampe aufweist, das im Betrieb der Projektionsanordnung der Entladungslampe einen als Wechselstrom ausgebildeten Lampenstrom mit der vorgebbaren Wellenform, die ein vorgebbares Kommutierungsschema (24) aufweist, bereitstellt, so dass eine Polung der Elektroden gemäß dem vorgebbaren Kommutierungsschema (24) kommutiert wird,
mit den Schritten:
a) Bereitstellen (S10) mindestens einer ersten Wellenform mit einem ersten Kommutierungsschema (24);
b) Überprüfen (S12; S16), ob ein Betrieb der Entladungslampe mit einem Lampenstrom mit der mindestens einen ersten Wellenform ein Kriterium von zwei Kriterien erfüllt, wobei eines der zwei Kriterien eine Flimmeramplitude der Projektionsanordnung betrifft;
**dadurch gekennzeichnet, dass**
eines der zwei Kriterien eine Lebensdauer der Entladungslampe betrifft; und
c) Falls das eine Kriterium erfüllt ist, Überprüfen (S12; S16), ob ein Betrieb der Entladungslampe mit einem Lampenstrom mit der mindestens einen ersten Wellenform ein weiteres Kriterium der zwei Kriterien erfüllt; und
d) Falls zumindest das eine und das weitere Kriterium erfüllt sind, Ablegen (S20) der mindestens einen ersten Wellenform in einem Speicher der Projektionsanordnung und Bereitstellen der mindestens einen ersten Wellenform als die vorgebbare Wellenform am Vorschaltgerät der Entladungslampe.

2. Verfahren nach Anspruch 1,
**dadurch gekennzeichnet, dass**
falls zumindest eines der zwei Kriterien nicht erfüllt ist, das erste Kommutierungsschema (24) der mindestens einen ersten Wellenform geändert wird (S34) und Springen zu Schritt a) (S10).

3. Verfahren nach einem der vorhergehenden Ansprüche,
**dadurch gekennzeichnet, dass**
zum Ermitteln einer vorgebbaren zweiten Wellenform des Lampenstroms zum Betreiben der Entladungslampe der Projektionsanordnung in zumindest einem zweiten vom ersten verschiedenen Betriebsmodus zumindest der Schritt durchgeführt wird:
e) Bereitstellen (S30) mindestens einer zweiten Wellenform mit einem zweiten Kommutierungsschema (24), wobei das Kommutierungsschema (24) derart ausgestaltet ist, dass es in einem vorgegebnen Zeitintervall (T) eine gerade Anzahl (k) an Kommutierungen (K) aufweist, wobei das Zeitintervall (T) dadurch vorgegeben ist, dass sich das Farbrad (20) beim Betrieb der Projektionsanordnung in diesem Zeitintervall (T) im zweiten Betriebsmodus zweimal dreht.

4. Verfahren nach Anspruch 3,
**gekennzeichnet durch** die weiteren Schritte:
f) Überprüfen (S32), ob ein Betrieb der Entladungslampe mit einem Lampenstrom mit der mindestens einen zweiten Wellenform ein Kriterium, das eine Lebensdauer der Entladungslampe betrifft, erfüllt; und
g) Falls zumindest das Kriterium erfüllt ist, Ablegen (S38) der mindestens einen zweiten Wellenform in einem Speicher der Projektionsanordnung und Bereitstellen der mindestens einen zweiten Wellenform als die zweite vorgebbare Wellenform am Vorschaltgerät der Entladungslampe.

5. Verfahren nach Anspruch 4,
**dadurch gekennzeichnet, dass**
falls das Kriterium nicht erfüllt ist, das zweite Kommutierungsschema der mindestens einen zweiten Wellenform geändert wird (S34) und Springen zu Schritt f) (S30).

6. Verfahren nach einem der vorhergehenden Ansprüche,
**dadurch gekennzeichnet, dass**
im ersten Betriebsmodus die Entladungslampe ungedimmt und/oder bis zu einem maximalen Dimmgrad betrieben wird.

7. Verfahren nach einem der Ansprüche 3 bis 6,
**dadurch gekennzeichnet, dass**
im zweiten Betriebsmodus die Entladungslampe zumindest zeitweise mit mehr als einem minimalen Dimmgrad betrieben wird.

8. Verfahren nach einem der vorhergehenden Ansprüche,
**dadurch gekennzeichnet, dass**
das erste Kommutierungsschema (24) beim Bereitstellen (S10) so gewählt wird, dass es in einem Zeitintervall (T), in welchem sich das Farbrad (20) zweimal dreht, eine ungerade Anzahl (k) an Kommutierungen (K) aufweist.

9. Verfahren nach einem der vorhergehenden Ansprüche,
**dadurch gekennzeichnet, dass**
zum Überprüfen, ob das Kriterium in Bezug auf die Lebensdauer für den ersten bzw. zweiten Betriebsmodus erfüllt ist, die voraussichtliche Lebensdauer der Entladungslampe bei einem Betrieb der Entladungslampe mit einem Lampenstrom mit der ersten bzw. zweiten Wellenform ermittelt wird, wobei das Kriterium dann erfüllt ist, wenn die ermittelte Lebensdauer größer oder gleich einem vorgegebenen Grenzwert ist.

10. Verfahren nach einem der vorhergehenden Ansprüche,
**dadurch gekennzeichnet, dass**
zum Überprüfen, ob das Kriterium in Bezug auf die Flimmeramplitude erfüllt ist, für eine vorgebbare Anzahl an unterschiedlichen Dimmgraden der Entladungslampe jeweils eine Flimmeramplitude einer photometrischen Größe des von der Projektionsanordnung im Betrieb der Entladungslampe mit der ersten Wellenform ausgegebenen Lichts bestimmt wird, wobei das Kriterium dann erfüllt ist, wenn die bestimmten Flimmeramplituden jeweils im Verhältnis zu einem Mittelwert der photometrischen Größe kleiner oder gleich einem vorgegebenen Grenzwert (Aₖᵣᵢₜ) ist.

11. Verfahren nach einem der vorhergehenden Ansprüche,
**dadurch gekennzeichnet, dass**
das Farbrad (20) eine vorgegebene Anzahl an Farbsegmenten (20a, 20b, 20c, 20d, 20e, 20f) aufweist, und die Projektionsanordnung derart ausgebildet ist, dass im Betrieb der Projektionsanordnung die Entladungslampe einen vorgegebenen Bereich des Farbrads (20), welcher kleiner ist als ein jeweiliges Farbsegment (20a, 20b, 20c, 20d, 20e, 20f), beleuchtet, wobei beim Bereitstellen (S10; S30) der ersten bzw. zweiten Wellenform mit dem ersten bzw. zweiten Kommutierungsschema (24) das erste bzw. zweite Kommutierungsschema (24) in Anpassung an eine vorgegebene Drehfrequenz des Farbrads (20) im Betrieb der Projektionsanordnung im ersten bzw. zweiten Betriebsmodus und in Anpassung an eine Anordnung und Ausbildung der Farbsegmente (20a, 20b, 20c, 20d, 20e, 20f) des Farbrads (20) so gewählt wird, dass im Betrieb der Projektionsanordnung im ersten bzw. zweiten Betriebsmodus eine Kommutierung (K) des Lampenstroms nur dann stattfindet, wenn sich der vorgegebene beleuchtete Bereich in einem Übergangsbereich (22) zwischen zwei Farbsegmenten (20a, 20b, 20c, 20d, 20e, 20f) des Farbrads (20) befindet.

12. Verfahren nach einem der vorhergehenden Ansprüche,
**dadurch gekennzeichnet, dass**
das Kommutierungsschema beim Bereitstellen (S10; S30) so gewählt wird, dass es zeitlich periodisch ist in Bezug auf ein vorgebbares Periodizitätsintervall (P).

13. Verfahren nach Anspruch 11,
**dadurch gekennzeichnet, dass**
das Kommutierungsschema beim Bereitstellen (s10; S30) so gewählt wird, dass in Bezug auf das Periodizitätsintervall (P) die Elektroden der Entladungslampe beim Betrieb der Entladungslampe mit einem Lampenstrom gemäß dem Kommutierungsschema (24) die gleiche Zeit mit einer ersten Polung betreiben werden wie mit einer zweiten Polung, wobei durch eine Kommutierung (K) eine jeweilige Elektroden der Entladungslampe von der ersten Polung in die zweite Polung wechselt oder umgekehrt.

14. Verfahren zum Ermitteln einer vorgebbaren Wellenform eines Lampenstroms zum Betreiben einer Entladungslampe der Projektionsanordnung in zumindest einem Betriebsmodus, wobei die Projektionsanordnung ein vorgegebenes drehbares Farbrad (20) und die Entladungslampe zum Beleuchten des Farbrads (20) aufweist, wobei die Entladungslampe zwei Elektroden aufweist, wobei die Projektionsanordnung ein Vorschaltgerät für die Entladungslampe aufweist, das im Betrieb der Projektionsanordnung der Entladungslampe einen als Wechselstrom ausgebildeten Lampenstrom mit der vorgebbaren Wellenform, die ein vorgebbares Kommutierungsschema (24) aufweist, bereitstellt, so dass eine Polung der Elektroden gemäß dem vorgebbaren Kommutierungsschema (24) kommutiert wird,
mit dem Schritt:
a) Bereitstellen (S30) mindestens einer Wellenform mit einem Kommutierungsschema (24);
**dadurch gekennzeichnet, dass**
das Kommutierungsschema (24) derart beschaffen ist, dass es in einem vorgegebnen Zeitintervall (T) eine gerade Anzahl (k) an Kommutierungen (K) aufweist, wobei das Zeitintervall (T) dadurch vorgegeben ist, dass sich das Farbrad (20) beim Betrieb der Projektionsanordnung in diesem Zeitintervall (T) zweimal dreht; und
b) Überprüfen (S32), ob ein Betrieb der Entladungslampe mit einem Lampenstrom mit der mindestens einen Wellenform ein Kriterium, das eine Lebensdauer der Entladungslampe betrifft, erfüllt;
c) Falls zumindest das eine Kriterium erfüllt ist, Ablegen (S38) der mindestens einen Wellenform in einem Speicher der Projektionsanordnung und Bereitstellen der mindestens einen Wellenform als die vorgebbare Wellenform am Vorschaltgerät der Entladungslampe.

15. Projektionsanordnung mit einem vorgegebenen drehbaren Farbrad (20) und einer Entladungslampe zum Beleuchten des Farbrads (20), die zwei Elektroden aufweist, wobei die Projektionsanordnung ein Vorschaltgerät für die Entladungslampe aufweist, das dazu ausgelegt ist, im Betrieb der Projektionsanordnung der Entladungslampe einen als Wechselstrom ausgebildeten Lampenstrom einer vorgegebenen Wellenform, die ein vorgegebenes Kommutierungsschema (24) aufweist, bereitzustellen, so dass eine Polung der Elektroden gemäß dem vorgegebenen Kommutierungsschema (24) kommutiert wird,
**dadurch gekennzeichnet, dass**
die Projektionsanordnung einen Speicher aufweist, in welchem die vorgegebene Wellenform abgelegt ist, wobei die im Speicher abgelegte vorgegebene Wellenform derart ausgebildet ist, dass bei einem Betrieb der Entladungslampe mit einem Lampenstrom mit der vorgegebenen Wellenform ein Kriterium in Bezug auf eine Lebensdauer der Entladungslampe und ein weiteres Kriterium in Bezug auf eine Flimmeramplitude der Entladungslampe erfüllt sind.

16. Projektionsanordnung mit einem vorgegebenen drehbaren Farbrad (20) und einer Entladungslampe zum Beleuchten des Farbrads (20), die zwei Elektroden aufweist, wobei die Projektionsanordnung ein Vorschaltgerät für die Entladungslampe aufweist, das dazu ausgelegt ist, im Betrieb der Projektionsanordnung der Entladungslampe einen als Wechselstrom ausgebildeten Lampenstrom einer vorgegebenen Wellenform, die ein vorgegebenes Kommutierungsschema (24) aufweist, bereitzustellen, so dass eine Polung der Elektroden gemäß dem vorgegebene Kommutierungsschema (24) kommutiert wird,
**dadurch gekennzeichnet, dass**
die Projektionsanordnung einen Speicher aufweist, in welchem die vorgegebene Wellenform abgelegt ist, wobei das vorgegebene Kommutierungsschema (24) derart beschaffen ist, dass es in einem vorgegebnen Zeitintervall (T) eine gerade Anzahl (k) an Kommutierungen (K) aufweist, wobei das Zeitintervall (T) dadurch vorgegeben ist, dass sich das Farbrad (20) beim Betrieb der Projektionsanordnung in diesem Zeitintervall (T) zweimal dreht, wobei die im Speicher abgelegte vorgegebene Wellenform weiterhin derart ausgebildet ist, dass bei einem Betrieb der Entladungslampe mit einem Lampenstrom mit der vorgegebenen Wellenform ein Kriterium in Bezug auf eine Lebensdauer der Entladungslampe erfüllt ist.

## Claims

1. Method for ascertaining a prescribable wave form of a lamp current for operating a discharge lamp of a projection arrangement in at least one first operating mode, wherein the projection arrangement has a prescribed rotatable colour wheel (20) and the discharge lamp for illuminating the colour wheel (20), wherein the discharge lamp has two electrodes, wherein the projection arrangement has a ballast device for the discharge lamp which provides a lamp current in the form of an alternating current with the prescribable wave form having a prescribable commutation scheme (24) to the discharge lamp during the operation of the projection arrangement so that a polarity of the electrodes is commutated in accordance with the prescribable commutation scheme (24),
having the steps of:
a) providing (S10) at least one first wave form having a first commutation scheme (24);
b) checking (S12; S16) whether an operation of the discharge lamp with a lamp current with the at least one first wave form satisfies a criterion of two criteria, wherein one of the two criteria relates to a flicker amplitude of the projection arrangement;
**characterized in that**
one of the two criteria relates to a lifetime of the discharge lamp; and,
c) if the one criterion has been satisfied, checking (S12; S16) whether an operation of the discharge lamp with a lamp current with the at least one first wave form satisfies a further criterion of the two criteria; and,
d) if at least the one and the further criteria have been satisfied, storing (S20) the at least one first wave form in a memory of the projection arrangement and providing the at least one first wave form as the prescribable wave form at the ballast device of the discharge lamp.

2. Method according to Claim 1, **characterized in that**, if at least one of the two criteria has not been satisfied, the first commutation scheme (24) of the at least one first wave form is changed (S34) and jumping to step a) (S10).

3. Method according to one of the preceding claims,
**characterized in that**,
for ascertaining a prescribable second wave form of the lamp current for operating the discharge lamp of the projection arrangement in at least one second operating mode, which differs from the first one, at least the following step is performed:
e) providing (S30) at least one second wave form with a second commutation scheme (24), wherein the commutation scheme (24) is designed such that it has an even number (k) of commutations (K) in a prescribed time interval (T), wherein the time interval (T) is prescribed by the colour wheel (20) rotating twice in this time interval (T) in the second operating mode during the operation of the projection arrangement.

4. Method according to Claim 3,
**characterized by** the further steps of:
f) checking (S32) whether an operation of the discharge lamp with a lamp current with the at least one second wave form satisfies a criterion relating to a lifetime of the discharge lamp; and,
g) if at least the criterion has been satisfied, storing (S38) the at least one second wave form in a memory of the projection arrangement and providing the at least one second wave form as the second prescribable wave form at the ballast device of the discharge lamp.

5. Method according to Claim 4,
**characterized in that**,
if the criterion has not been satisfied, the second commutation scheme of the at least one second wave form is changed (S34) and jumping to step f) (S30).

6. Method according to one of the preceding claims,
**characterized in that**
the discharge lamp is operated in the first operating mode without being dimmed and/or up to a maximum dimming level.

7. Method according to one of Claims 3 to 6,
**characterized in that**
the discharge lamp is operated in the second operating mode at least temporarily with more than one minimum dimming level.

8. Method according to one of the preceding claims,
**characterized in that**
the first commutation scheme (24) is selected during the providing (S10) such that it has an odd number (k) of commutations (K) in a time interval (T) in which she colour wheel (20) rotates twice.

9. Method according to one of the preceding claims,
**characterized in that**,
for checking whether the criterion relating to the lifetime has been satisfied for the first or second operating mode, the life expectancy of the discharge lamp during an operation of the discharge lamp with a lamp current with the first or second wave form is ascertained, wherein the criterion has been met if the ascertained lifetime is greater than or equal to a prescribed limit value.

10. Method according to one of the preceding claims,
**characterized in that**,
for checking whether the criterion relating to the flicker amplitude has been satisfied, in each case one flicker amplitude of a photometric variable of the light output by the projection arrangement during the operation of the discharge lamp with the first wave form is determined for a prescribable number of different dimming levels of the discharge lamp, wherein the criterion has been satisfied if the determined flicker amplitudes are, in each case in relation to an average value of the photometric variable, smaller than or equal to a prescribed limit value (Aₖᵣᵢₜ).

11. Method according to one of the preceding claims,
**characterized in that**
the colour wheel (20) has a prescribed number of colour segments (20a, 20b, 20c, 20d, 20e, 20f), and the projection arrangement is embodied such that during the operation of the projection arrangement the discharge lamp illuminates a prescribed region of the colour wheel (20) that is smaller than a respective colour segment (20a, 20b, 20c, 20d, 20e, 20f), wherein during the providing (S10; S30) of the first or second wave form with the first or second commutation scheme (24), the first or second commutation scheme (24) is selected, in adaptation to a prescribed rotation frequency of the colour wheel (20) during the operation of the projection arrangement in the first or second operating mode and in adaptation to an arrangement and embodiment of the colour segments (20a, 20b, 20c, 20d, 20e, 20f) of the colour wheel (20), such that, during the operation of the projection arrangement in the first or second operating mode, a commutation (K) of the lamp current takes place only if the prescribed illuminated region is located in a transition region (22) between two colour segments (20a, 20b, 20c, 20d, 20e, 20f) of the colour wheel (20).

12. Method according to one of the preceding claims,
**characterized in that**
the commutation scheme during the providing (S10; S30) is selected such that it is temporally periodic with respect to a prescribable periodicity interval (P).

13. Method according to Claim 11,
**characterized in that**
the commutation scheme during the providing (S10; S30) is selected such that, with respect to the periodicity interval (P), the electrodes of the discharge lamp during the operation of the discharge lamp with a lamp current are operated in accordance with the commutation scheme (24) for the same time with a first polarity as with a second polarity, wherein a respective electrode of the discharge lamp changes from the first polarity to the second polarity owing to a commutation (K), or vice versa.

14. Method for ascertaining a prescribable wave form of a lamp current for operating a discharge lamp of the projection arrangement in at least one operating mode, wherein the projection arrangement has a prescribed rotatable colour wheel (20) and the discharge lamp for illuminating the colour wheel (20), wherein the discharge lamp has two electrodes, wherein the projection arrangement has a ballast device for the discharge lamp which provides a lamp current in the form of an alternating current with the prescribable wave form having a prescribable commutation scheme (24) to the discharge lamp during the operation of the projection arrangement so that a polarity of the electrodes is commutated in accordance with the prescribable commutation scheme (24),
having the step of:
a) providing (S30) at least one wave form with a commutation scheme (24);
**characterized in that**
the commutation scheme (24) is of a nature such that it has an even number (k) of commutations (K) in a prescribed time interval (T), wherein the time interval (T) is prescribed by the colour wheel (20) rotating twice in this time interval (T) during the operation of the projection arrangement; and
b) checking (S32) whether an operation of the discharge lamp with a lamp current with the at least one wave form satisfies a criterion relating to a lifetime of the discharge lamp;
c) if at least the one criterion has been satisfied, storing (S38) the at least one wave form in a memory of the projection arrangement and providing the at least one wave form as the prescribable wave form at the ballast device of the discharge lamp.

15. Projection arrangement having a prescribable rotatable colour wheel (20) and a discharge lamp for illuminating the colour wheel (20), which discharge lamp has two electrodes, wherein the projection arrangement has a ballast device for the discharge lamp which is configured to provide a lamp current in the form of an alternating current of a prescribed wave form having a prescribed commutation scheme (24) to the discharge lamp during the operation of the projection arrangement so that a polarity of the electrodes is commutated in accordance with the prescribed commutation scheme (24),
**characterized in that**
the projection arrangement has a memory in which the prescribed wave form is stored, wherein the prescribed wave form stored in the memory is embodied such that a criterion relating to a lifetime of the discharge lamp and a further criterion relating to a flicker amplitude of the discharge lamp have been satisfied during an operation of the discharge lamp with a lamp current with the prescribed wave form.

16. Projection arrangement having a prescribed rotatable colour wheel (20) and a discharge lamp for illuminating the colour wheel (20), which discharge lamp has two electrodes, wherein the projection arrangement has a ballast device for the discharge lamp which is configured to provide a lamp current in the form of an alternating current of a prescribed wave form having a prescribed commutation scheme (24) to the discharge lamp during the operation of the projection arrangement so that a polarity of the electrodes is commutated with respect to the prescribed commutation scheme (24),
**characterized in that**
the projection arrangement has a memory in which the prescribed wave form is stored, wherein the prescribed commutation scheme (24) is of a nature such that it has an even number (k) of commutations (K) in a prescribed time interval (T), wherein the time interval (T) is prescribed by the colour wheel (20) rotating twice in this time interval (T) during the operation of the projection arrangement, wherein the prescribed wave form stored in the memory is furthermore embodied such that a criterion relating to a lifetime of the discharge lamp has been satisfied during an operation of the discharge lamp with a lamp current with the prescribed wave form.

## Revendications

1. Procédé pour déterminer une forme d'onde prédéterminable d'un courant de lampe pour faire fonctionner une lampe à décharge d'un ensemble de projection dans au moins un premier mode de service, dans lequel l'ensemble de projection comprend une roue chromatique (20) rotative prédéterminée et la lampe à décharge pour illuminer la roue chromatique (20), dans lequel la lampe à décharge comprend deux électrodes, dans lequel l'ensemble de projection comprend un ballast pour la lampe à décharge fournissant, pendant le service de l'ensemble de projection de la lampe à décharge, un courant de lampe sous forme de courant alternatif ayant la forme d'onde prédéterminable, qui présente un schéma de commutation prédéterminable (24), de sorte qu'une polarité des électrodes est commutée conformément au schéma de commutation prédéterminable (24), comprenant les étapes suivantes :
a) mise à disposition (S10) d'au moins une première forme d'onde présentant un premier schéma de commutation (24);
b) vérification (S12 ; S16) si un fonctionnement de la lampe à décharge avec un courant de lampe ayant l'au moins une première forme d'onde répond à un critère parmi deux critères, l'un des deux critères concernant une amplitude de scintillement de l'ensemble de projection ;
**caractérisé en ce que**
l'un des deux critères concerne une durée de vie de la lampe à décharge ; et
c) dans le cas où un critère est satisfait, vérification (S12; S16) si un fonctionnement de la lampe à décharge avec un courant de lampe ayant l'au moins une première forme d'onde répond à un critère supplémentaire des deux critères ; et
d) dans le cas où l'au moins un critère et le critère supplémentaire sont satisfais, stockage (S20) de l'au moins une première forme d'onde dans une mémoire de l'ensemble de projection et mise à disposition de l'au moins une première forme d'onde en tant que forme d'onde prédéterminable sur le ballast de la lampe à décharge.

2. Procédé selon la revendication 1, **caractérisé en ce que**, dans le cas où au moins un des deux critères n'est pas satisfait, le premier schéma de commutation (24) de l'au moins une première forme d'onde est modifié (S34) et passage à l'étape a) (S10).

3. Procédé selon l'une des revendications précédentes,
**caractérisé en ce que**,
pour déterminer une deuxième forme d'onde prédéterminable du courant de lampe afin de faire fonctionner la lampe à décharge de l'ensemble de projection dans au moins un deuxième mode de service différent du premier mode de service, au moins l'étape suivante est réalisée :
e) mise à disposition (S30) d'au moins une deuxième forme d'onde ayant un deuxième schéma de commutation (24), dans lequel le schéma de commutation (24) est conçu de telle sorte qu'il présente un nombre pair (k) de commutations (K) dans un intervalle temporel (T) prédéterminé, dans lequel l'intervalle temporel (T) est prédéterminé par le fait que la roue chromatique (20) tourne deux fois pendant le service de l'ensemble de projection dans cet intervalle temporel (T) dans le deuxième mode de service.

4. Procédé selon la revendication 3, **caractérisé par** les étapes supplémentaires :
f) vérification (S32) si un fonctionnement de la lampe à décharge avec un courant de lampe présentant l'au moins une deuxième forme d'onde répond à un critère concernant une durée de vie de la lampe à décharge ; et
g) dans le cas où le critère est satisfait, stockage (S38) de l'au moins une deuxième forme d'onde dans une mémoire de l'ensemble de projection et mise à disposition de l'au moins une deuxième forme d'onde en tant que deuxième forme d'onde prédéterminable sur le ballast de la lampe à décharge.

5. Procédé selon la revendication 4, **caractérisé en ce que**, dans le cas où le critère n'est pas satisfait, le deuxième schéma de commutation de l'au moins une deuxième forme d'onde est modifié (S34) et passage à l'étape f) (S30).

6. Procédé selon l'une des revendication précédentes,
**caractérisé en ce que**,
dans le premier mode de service, la lampe à décharge est opérée sans gradation et/ou jusqu'à un certain niveau de gradation maximum.

7. Procédé selon l'une des revendications 3 à 6,
**caractérisé en ce que**,
dans le deuxième mode de service, la lampe à décharge est opérée au moins temporairement avec plus d'un niveau de gradation minimum.

8. Procédé selon l'une des revendications précédentes,
**caractérisé en ce que**
le premier schéma de commutation (24) est sélectionné au moment de la mise à disposition (S10) de manière à présenter un nombre impair (k) de commutations (K) dans un intervalle temporel (T) dans lequel la roue chromatique (20) tourne deux fois.

9. Procédé selon l'une des revendication précédentes,
**caractérisé en ce que**,
afin de vérifier s'il y a satisfaction du critère lié à la durée de vie pour le premier respectivement deuxième mode de service, la durée de vie probable de la lampe à décharge est déterminée pour un service de la lampe à décharge avec un courant de lampe ayant la première respectivement la deuxième forme d'onde, le critère étant rempli si la durée de vie déterminée est supérieure ou égale à une valeur limite prédéterminée.

10. Procédé selon l'une des revendication précédentes,
**caractérisé en ce que**,
afin de vérifier s'il y a satisfaction du critère lié à l'amplitude de scintillement, une amplitude de scintillement d'une grandeur photométrique de la lumière émise par l'ensemble de projection pendant l'opération de la lampe à décharge avec la première forme d'onde est déterminée chacune pour un nombre prédéterminable de niveaux de gradation différents de la lampe à décharge, le critère étant rempli si les amplitudes de scintillement déterminées sont inférieures ou égales chacune à une valeur limite prédéterminée (A_{crit}) par rapport à une valeur moyenne de la grandeur photométrique.

11. Procédé selon l'une des revendications précédentes,
**caractérisé en ce que**
la roue chromatique (20) présente un nombre prédéterminé de segments de couleur (20a, 20b, 20c, 20d, 20e, 20f), et l'ensemble de projection est conçu de manière à ce que, pendant le service de l'ensemble de projection, la lampe à décharge illumine une zone prédéterminée de la roue chromatique (20) qui est plus petite qu'un segment de couleur respectif (20a, 20b, 20c, 20d, 20e, 20f), dans lequel, lors de la mise à disposition (S10 ; S30)de la première respectivement deuxième forme d'onde avec le premier respectivement deuxième schéma de commutation (24), le premier respectivement deuxième schéma de commutation (24), en fonction d'une fréquence de rotation prédéterminée de la roue chromatique (20) pendant le service de l'ensemble de projection dans le premier respectivement deuxième mode de service et en fonction d'un agencement et d'une conformation des segments de couleur (20a, 20b, 20c, 20d, 20e, 20f) de la roue chromatique (20) est choisi de manière à ce qu'en service de l'ensemble de projection dans le premier respectivement deuxième mode de service, une commutation (K) du courant de lampe n'a lieu que si la zone illuminée prédéterminée se trouve dans une zone de superposition (22) de deux segments de couleur (20a, 20b, 20c, 20d, 20e, 20f) de la roue chromatique (20).

12. Procédé selon l'une des revendications précédentes,
**caractérisé en ce que**,
lors de la mise à disposition (S10; S30), le schéma de commutation est choisi de manière à ce qu'il soit périodique dans le temps par rapport à un intervalle de périodicité prédéfini (P).

13. Procédé selon la revendication 11, **caractérisé en ce que**,
lors de la mise à disposition (S10; S30), le schéma de commutation est choisi de telle manière que, par rapport à l'intervalle de périodicité (P), les électrodes de la lampe à décharge fonctionnent pendant le même temps tant avec une première polarité qu'une deuxième polarité, lors du service de la lampe à décharge avec un courant de lampe conformément au schéma de commutation (24), une électrode respective de la lampe à décharge passant de la première polarité à la deuxième polarité ou vice versa, grâce à une commutation (K) .

14. Procédé pour déterminer une forme d'onde prédéterminable d'un courant de lampe afin de faire fonctionner une lampe à décharge de l'ensemble de projection dans au moins un mode de service, dans lequel l'ensemble de projection présente une roue chromatique (20) rotative prédéterminée et la lampe à décharge pour illuminer la roue chromatique (20), dans lequel la lampe à décharge comprend deux électrodes, dans lequel l'ensemble de projection comprend un ballast pour la lampe à décharge fournissant, pendant le service de l'ensemble de projection de la lampe à décharge, un courant de lampe sous forme de courant alternatif ayant la forme d'onde prédéterminable, qui présente un schéma de commutation prédéterminable (24), de sorte qu'une polarité des électrodes est commutée conformément au schéma de commutation prédéterminable (24), comprenant l'étape:
a) mise à disposition (S30) d'au moins une forme d'onde ayant un schéma de commutation (24); **caractérisé en ce que** le schéma de commutation (24) est conçu de telle sorte qu'il présente un nombre pair (k) de commutations (K) dans un intervalle temporel (T) prédéterminé, l'intervalle temporel (T) étant prédéterminé par le fait que la roue chromatique (20) tourne deux fois pendant le fonctionnement de l'ensemble de projection dans cet intervalle temporel (T) ; et
b) vérification (S32) si un service de la lampe à décharge avec un courant de lampe ayant l'au moins une forme d'onde répond à un critère lié à une durée de vie de la lampe à décharge ;
c) dans le cas où l'au moins un critère est satisfait, stockage (S38) de l'au moins une forme d'onde dans une mémoire de l'ensemble de projection et mise à disposition de l'au moins une forme d'onde en tant qu'onde prédéterminable sur le ballast de la lampe à décharge.

15. Ensemble de projection comprenant une roue chromatique (20) rotative prédéterminée et une lampe à décharge pour illuminer la roue chromatique (20) comprenant deux électrodes, dans lequel l'ensemble de projection comprend un ballast pour la lampe à décharge conçu pour fournir à la lampe à décharge, pendant le service de l'ensemble de projection, un courant de lampe sous forme de courant alternatif d'une forme d'onde prédéterminée présentant un schéma de commutation (24) prédéterminé, de manière à ce qu'une polarité des électrodes soit commutée conformément au schéma de commutation prédéterminé (24),
**caractérisé en ce que**
l'ensemble de projection comprend une mémoire dans laquelle est stockée la forme d'onde prédéterminée, la forme d'onde prédéterminée stockée dans la mémoire étant conformée de manière à ce que, lors d'un fonctionnement de la lampe à décharge avec un courant de lampe ayant la forme d'onde prédéterminée, un critère lié à une durée de vie de la lampe à décharge et un critère supplémentaire lié à une amplitude de scintillement de la lampe à décharge sont satisfaits.

16. Ensemble de projection comprenant une roue chromatique (20) rotative prédéterminée et une lampe à décharge pour illuminer la roue chromatique (20) comprenant deux électrodes, dans lequel l'ensemble de projection comprend un ballast pour la lampe à décharge conçu pour fournir à la lampe à décharge, pendant le service de l'ensemble de projection, un courant de lampe sous forme de courant alternatif ayant une forme d'onde prédéterminée qui présente un schéma de commutation (24) prédéterminé, de manière à ce qu'une polarité des électrodes soit commutée conformément au schéma de commutation prédéterminé (24),
**caractérisé en ce que**
l'ensemble de projection comprend une mémoire dans laquelle est stockée la forme d'onde prédéterminée, le schéma de commutation (24) prédéterminé étant conçu de telle sorte qu'il présente, dans un intervalle temporel (T) prédéterminé, un nombre pair (k) de commutations (K), l'intervalle temporel (T) étant prédéterminé par le fait que la roue chromatique (20) tourne deux fois pendant le fonctionnement de l'ensemble de projection dans cet intervalle temporel (T), la forme d'onde prédéterminée stockée dans la mémoire préservant une forme telle que lors d'un fonctionnement de la lampe à décharge avec un courant de lampe ayant la forme d'onde prédéterminée, un critère lié à une durée de vie de la lampe à décharge est satisfait.
